# EUROPEAN PATENT SPECIFICATION

(11) **EP 3 754 777 B1**
(45) Date of publication and mention of the grant of the patent: **08.04.2026**
(21) Application number: 18906048.6
(22) Date of filing: 19.11.2018
(51) Int. Cl.: H01M 10/44, H02J 7/00

(54) **CHARGING METHOD AND APPARATUS, SYSTEM, CHARGING CIRCUIT, TERMINAL AND CHARGING SYSTEM**
LADEVERFAHREN UND -VORRICHTUNG, SYSTEM, LADESCHALTUNG, ENDGERÄT UND LADESYSTEM
PROCÉDÉ ET APPAREIL DE CHARGE, SYSTÈME, CIRCUIT DE CHARGE, TERMINAL ET SYSTÈME DE CHARGE

(30) Priority: 13.02.2018 CN 201810149703
(43) Date of publication of application: 23.12.2020
(73) Proprietor: ZTE Corporation, Shenzhen, Guangdong 518057 (CN)
(72) Inventor: GONG, Yong, Shenzhen, Guangdong 518057 (CN)
(74) Representative: Mozzi, Matteo
(86) International application number: PCT/CN2018/116219
(87) International publication number: WO 2019/157844

(56) References cited:
- EP-A1- 3 148 039
- EP-B1- 3 447 877
- WO-A1-2009/017783
- CN-A- 105 552 978
- CN-A- 106 100 028
- CN-A- 106 787 055
- CN-A- 107 171 384
- CN-A- 107 231 013
- CN-A- 108 258 348
- US-A1- 2018 041 060
- US-B2- 9 160 166

## Description

### Technical Field

The present disclosure relates to the field of charging, and in particular to a charging method, apparatus and system, a charging circuit and a terminal.

### Background

Terminals such as mobile phones have become living tools in communicative interaction, digital entertainment and other aspects; and a large capacity battery has been a typical configuration on which the particular emphasis is placed by the terminals. With the emergence of large capacity batteries and the trend of frequent usage, the quick charging becomes an important aspect of user experience of the terminal. While the charging rate of the battery is increased and the charging current of the battery is increased, how to enable the terminal to obtain a large charging current during charging, shorten the charging time and improve the user experience of the terminal is an important direction of the terminal in research and development. Particularly, for the USB PD 3.1 released by the Universal Serial Bus (USB) Group, the VBUS of the USB may support increment changes of 20 mV and 10 mA, such that the terminal provided with a TYPE C interface may support a more flexible quick charging process.

At present, with the increase of the battery capacity of the terminal, the quick charging becomes an urgently required technology for the terminal. The essence of the quick charging is to increase an output power of a charging apparatus, i.e., a larger charging current is provided by a charging conversion chip for the battery, thus shortening the charging time. There are two quick charging manners presently: a low-voltage large current charging manner and a high-voltage charging current.

The low-voltage large current charging manner is to increase the output power of the charging apparatus by increasing the output current of the charging apparatus, and thus the battery can also obtain the large charging current. Currently, the low-voltage large current charging manner is mainly implemented by directly charging, i.e., the battery is directly charged by the charging apparatus. When the charging process enters a quick charging stage, a charging algorithm implementation control unit of the terminal notifies, according to a detected battery state, the charging apparatus of outputting appropriate current and voltage to directly charge the battery. The essence of such a mode is to transfer the implementation of the function of the charging conversion chip of the terminal to the charging apparatus for implementation, and bring heat caused by the charging conversion chip in a voltage conversion process to the charging apparatus. The low-voltage large current charging manner has the advantages that the charging apparatus has a large structural space relative to the terminal and may be fully dissipated, and the charging process does not result in heating of the terminal when the charging apparatus quickly charges the battery of the terminal.

The high-voltage charging manner is to increase the output power of the charging apparatus by increasing the output voltage of the charging apparatus. The charging conversion chip of the terminal acquires a large input power and converts the input power into a large output power. When an output voltage keeps unchanged, i.e., the converted output current is large, the battery obtains the large charging current to shorten the charging time. During charging, the charging algorithm implementation control unit of the terminal notifies, according to detected states of the battery and the charging conversion chip, the charging apparatus of outputting an appropriate high voltage. When transmitted to the charging conversion chip of the terminal, the high voltage is converted into a voltage suitable for the battery and a corresponding current to charge the battery. In the high-voltage charging manner, the terminal has two types of charging conversion chips, one being an inductive step-down charging conversion chip, and the other being a switched capacitor array charging conversion chip. The inductive step-down charging conversion chip may output a required voltage according to the charging process, provided that an input voltage is higher than a minimum input value, and is mainly represented by the quick charging of the terminal platform vendor Qualcomm. The switched capacitor array charging conversion chip is to always keep the input and the output at a conversion proportional relationship, and by virtue of the conversion proportional relationship, the charging conversion chip keeps at a high working efficiency.

Presently, both the low-voltage large current charging manner and the high-voltage charging manner have the following defects:
1. The low-voltage large current manner has a large line impedance loss, a high requirement on a charging cable and a high cable cost. The conventional micro USB connector has a through-current capability of 1.8 A in electrical specification, and cannot meet the low-voltage large current manner, so both the charging cable and the connector need to be re-customized, and the non-standard cable results in the poor user experience.
2. The high-voltage charging manner has the advantages that the current transmitted by the charging apparatus to the charging conversion chip is relatively small, the line loss is small, the standard charging cable and connector can be used, the cable cost is low and the applicable cable range is wide. However, the working efficiency of the inductive step-down charging conversion chip is not high under the large power, such that when the work is converted at the large power voltage, the charging conversion chip heats seriously to cause heating of the terminal during charging and the poor user experience. As a consequence, during actual charging, the charging conversion chip cannot work at the large power due to the heating reason, cannot output the large current and thus cannot implement the quick charging. It is apparent that the working state of the inductive step-down charging conversion chip is restricted because of the working efficiency to affect the charging efficiency.

US 2018/0410602 A1 discloses battery charging architectures.
WO 2009/017783 A1 discloses voltage converter with combined capacitive voltage divider, buck converter and battery charger.
EP 3148039 A1 discloses fast charging method, power source adapter and mobile terminal. CN 107231013 A discloses charging method, terminal, charger and charging system.

### Summary

The embodiments of the present disclosure provide a charging method, apparatus and system, a charging circuit, a terminal and a charging system, to at least solve the technical problems of poor charging efficiency and user experience of charging solutions in the relevant art.

According to an aspect of the embodiments of the present disclosure, a charging method is provided, which includes that: a working parameter of a to-be-charged terminal during charging is detected, wherein the working parameter reflects a state of the to-be-charged terminal during charging; and a working state of a charging conversion circuit in the to-be-charged terminal is adjusted according to the working parameter, wherein different working states correspond to different charging efficiencies.

According to an aspect of the embodiments of the present disclosure, a charging circuit is provided, which includes: a charging conversion circuit, connected to a charging management module, and configured to convert an input voltage of the charging conversion circuit into an output voltage according to a preset conversion proportion; and a collection module, connected to the charging management module, and configured to collect a working parameter of a to-be-charged terminal during charging and send the working parameter to the charging management module, wherein the working parameter reflects a state of the to-be-charged terminal during charging; and the charging management module is configured to generate, according to the working parameter, a control instruction for implementing the following functions: adjusting a working state of the charging conversion circuit in the to-be-charged terminal, wherein different working states correspond to different charging efficiencies.

According to an aspect of the embodiments of the present disclosure, a terminal, which includes the above charging circuit, is provided.

According to an aspect of the embodiments of the present disclosure, a charging system is provided, which includes: a charging apparatus and a to-be-charged terminal; the charging apparatus includes: a power management module, connected to a power conversion output module, and configured to communicate with a charging management module in the to-be-charged terminal and generate a control instruction; and the power conversion output module, configured to output an output electrical signal corresponding to the control instruction according to the control instruction; the to-be-charged terminal includes: a charging conversion circuit, connected to the charging management module, and configured to convert an input voltage of the charging conversion circuit into an output voltage according to a preset conversion proportion; and a collection module, connected to the charging management module, and configured to collect a working parameter of the to-be-charged terminal during charging and send the working parameter to the charging management module, wherein the working parameter reflects a state of the to-be-charged terminal during charging; and the charging management module is configured to generate, according to the working parameter, a control instruction for implementing the following functions: adjusting a working state of the charging conversion circuit in the to-be-charged terminal, wherein different working states correspond to different charging efficiencies.

According to an aspect of the embodiments of the present disclosure, a charging apparatus is provided, which includes: a detection module, configured to detect a working parameter of a to-be-charged terminal during charging, wherein the working parameter reflects a state of the to-be-charged terminal during charging; and an adjustment module, configured to adjust a working state of a charging conversion circuit in the to-be-charged terminal according to the working parameter, wherein different working states correspond to different charging efficiencies.

According to an aspect of the embodiments of the present disclosure, a storage medium is provided, which includes a stored program; and the program is executed to control a device where the storage medium is located to implement any above-mentioned charging method.

According to an aspect of the embodiments of the present disclosure, a processor is provided; the processor is configured to execute a program; and the program is executed to implement any above-mentioned charging method.

According to an aspect of the embodiments of the present disclosure, an electronic apparatus is provided, which includes a memory and a processor; a computer program is stored in the memory; and the processor is configured to implement any above-mentioned charging method through the computer program.

In the embodiments of the present disclosure, by using a manner of adjusting the working state (which reflects the charging efficiency) of the charging conversion circuit in the to-be-charged terminal according to the working parameter of the to-be-charged terminal during charging, the adjustment on the charging efficiency of the charging conversion circuit is implemented; and therefore, the charging efficiency is improved, and the technical problems of poor charging efficiency and user experience in charging solutions in the relevant art are solved.

### Brief Description of the Drawings

Fig. 1a is a structural schematic diagram of a charging system according to an embodiment of the present disclosure.
Fig. 1b is a structural schematic diagram of a charging system according to an embodiment of the present disclosure.
Fig. 1c is a structural schematic diagram of another exemplary charging system according to an embodiment of the present disclosure.
Fig. 2 is a flowchart schematic diagram of a charging method according to an embodiment of the present disclosure.
Fig. 3 is a flowchart schematic diagram of a charging method when an output signal of an exemplary charger power is adjustable according to an embodiment of the present disclosure.
Fig. 4 is a flowchart schematic diagram of a charging method when an output signal of another exemplary charger power is fixed (i.e., the charger power has a fixed output) according to an embodiment of the present disclosure.
Fig. 5 is a workflow schematic diagram of an exemplary charger according to an embodiment of the present disclosure.
Fig. 6 is a structural schematic diagram of an exemplary charging circuit according to an embodiment of the present disclosure.
Fig. 7 is a circuit structural schematic diagram of an exemplary switched capacitor array according to an embodiment of the present disclosure.
Fig. 8 is a relationship diagram of an exemplary clk signal and /clk signal according to an embodiment of the present disclosure.
Fig. 9 is a structural schematic diagram of another exemplary charging circuit according to an embodiment of the present disclosure.
Fig. 10 is a flowchart of a charging method of another exemplary charger with an adjustable output power according to an embodiment of the present disclosure.
Fig. 11 is a flowchart of a charging method of another exemplary charger with an adjustable output power according to an embodiment of the present disclosure.
Fig. 12 is a structural schematic diagram of another exemplary charging circuit according to an embodiment of the present disclosure.
Fig. 13 is a flowchart of a charging method of another exemplary charger with an adjustable output power according to an embodiment of the present disclosure.
Fig. 14 is a flowchart of a charging method of another exemplary charger with an unadjustable output power according to an embodiment of the present disclosure.
Fig. 15 is a structural schematic diagram of another exemplary charging system according to an embodiment of the present disclosure.
Fig. 16 is a flowchart of a charging method when another exemplary charger output power is adjustable according to an embodiment of the present disclosure.
Fig. 17 is a flowchart of a charging method of another exemplary charger with an unadjustable output power according to an embodiment of the present disclosure.
Fig. 18 is a structural schematic diagram of a charging apparatus according to an embodiment of the present disclosure.
Fig. 19 is a flowchart of an exemplary charging method according to an embodiment of the present disclosure.
Fig. 20 is a structural schematic diagram of a charging circuit according to an embodiment of the present disclosure.

### Detailed Description of the Embodiments

The technical terms involved in the embodiments of the present disclosure are set forth hereinafter.

Charging efficiency of charging conversion circuit is a ratio of an output power to an input power in the charging conversion circuit.

Array capacitance array includes at least one capacitor switch combination, and each capacitor switch combination includes at least one capacitor switch circuit.

In the relevant art, a charging conversion chip based on a switched capacitor array converts the input voltage and the output voltage according to a proportional relationship, and achieves a higher working efficiency within an allowable working current range. Compared with the working efficiency of an inductive charging conversion chip, the switched capacitor array charging conversion chip has been greatly improved. However, the high efficiency of the switched capacitor array charging conversion chip is related to the conversion power and the ratio of the input voltage to the output voltage. When the ratio of the input voltage to the output voltage exceeds a certain range, the working efficiency of the switched capacitor array charging conversion chip drops sharply. When the output voltage of a charging apparatus cannot be adjusted following the voltage of a to-be-charged battery (i.e., the output voltage of the switched capacitor array charging conversion chip), the ratio of the input voltage to the output voltage of the switched capacitor array charging conversion chip exceeds a certain range, and the working efficiency of the switched capacitor array charging conversion chip is not ideal. When the input voltage is not changed and the power becomes small to be within a certain range, i.e., the input current becomes small to be within a certain range, the working efficiency of the switched capacitor array charging conversion chip also drops sharply. Therefore, the high-efficiency working state of the switched capacitor array charging conversion chip is susceptible to restrictions.

Moreover, although a low-voltage high-current charging manner in the relevant art transfers the heating of the charging conversion chip to the charging apparatus end and the influence caused by the working efficiency of the charging conversion chip is ignored, such a charging manner still cannot be widely applied because of the specificity and high cost of a charging cable and a connector as well as the circuit design complexity. The high-voltage charging manner has the advantages over the low-voltage large-current charging manner in the line loss and the device cost, but because of the working efficiency, the high-voltage charging manner implemented by an inductive step-down charging conversion chip does not reflect the advantages over the low-voltage large-current manner. The switched capacitor array charging conversion chip has higher efficiency when working at a high power, and has obvious advantages over the low-voltage large-current charging manner. However, it is known from the above analysis that the high efficiency operation of the current switched capacitor array charging conversion chip is also affected by the input voltage, the output voltage and the power, such that the usage range of the switched capacitor array charging conversion chip is also limited.

### Embodiment 1

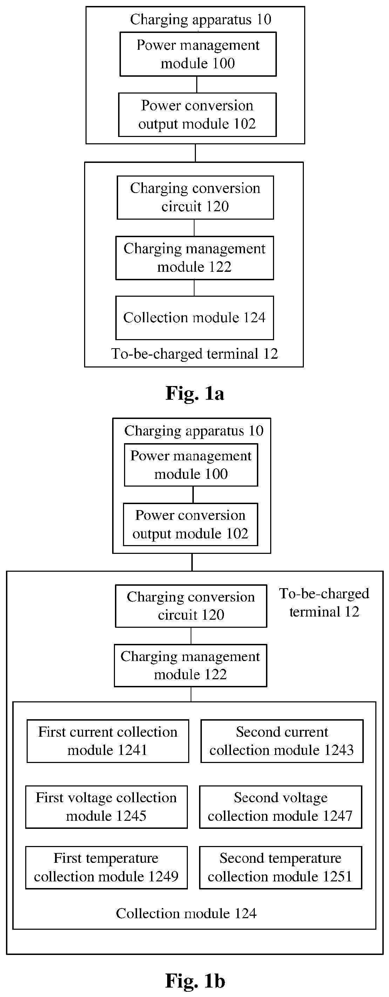

Fig. 1a is a structural schematic diagram of a charging system according to an embodiment of the present disclosure. As shown in Fig. 1a, the charging system includes a charging apparatus 10 and a to-be-charged terminal 12.

The charging apparatus 10 includes a power management module 100 and a power conversion output module 102.

The power management module 100 is connected to the power conversion output module 102, and is configured to communicate with a charging management module in the to-be-charged terminal, and generate a control instruction; and the power conversion output module 102 is configured to output an output electrical signal corresponding to the control instruction according to the control instruction.

In an exemplary embodiment, the power management module 100 is configured to conduct communication and identification with the to-be-charged terminal before charging, and control the power conversion output module 102 in the charging process according to communication information. The power management module 100 may communicate with the to-be-charged terminal through the following manners: for example, a charging apparatus with a TYPE C interface (such as a charging apparatus) may conduct communication via a signal line CC of the interface, and a charging apparatus with a non-TYPE C USB interface may conduct communication via a data signal line (D+/D-) of the USB interface.

The communication content between the to-be-charged terminal and the power management module 100 includes but not limited to: a charging protocol supported by the charging apparatus and a power output capability of the charging apparatus are obtained, for example, a range of the output voltage, a range of the output current, an adjustable step size of the output voltage, and an adjustable step size of the output current.

The power conversion output module 102 is configured to output accurate voltage and current according to communication information of the power management module.

The power management module 100 of the charging apparatus is configured to perform identification interaction with the to-be-charged terminal before charging, which not only indicates that the charging apparatus can have the specific power output capability according to the demand of the terminal, but also can know whether the terminal has the demand of the specific power output. When the communication and identification between the power management module 100 and the to-be-charged terminal fails, the power management module 100 controls the power conversion output module 102 to perform power output according to a standard specification of the charging apparatus. The power management module 100 may be a functional circuit implemented by a microprocessor chip or a chip supporting a certain protocol (for example, a TYPE C PD protocol); and power conversion output may be realized by a programmable power chip or a circuit that supports adjustable voltage and current.

The to-be-charged terminal 12 includes: a charging conversion circuit 120, a collection module 124, and a charging management module 122.

The charging conversion circuit 120 is connected to the charging management module 122, and configured to convert an input voltage of the charging conversion circuit 120 into an output voltage according to a preset conversion proportion.

In an exemplary embodiment, the charging conversion circuit 120 includes: a capacitor switch array; the capacitor switch array includes: multiple capacitor switch combinations. For the multiple capacitor switch combinations, each capacitor switch combination in the multiple capacitor switch combinations corresponds to one conversion proportion, and by closing and/or opening at least a part of capacitor switch circuits in each capacitor switch combination, charge-discharge states of at least a part of capacitors in each capacitor switch combination are controlled. The conversion proportion is a ratio of an input voltage to an output voltage in the charging conversion circuit. The implementation manners of the charging conversion circuit 120 will be described below in detail, and will not be elaborated herein.

The collection module 124 is connected to the charging management module 122, and configured to collect a working parameter of a to-be-charged terminal during charging, and send the working parameter to the charging management module 122, wherein the working parameter reflects a state of the to-be-charged terminal during charging.

For example, the collection module 124 includes, but is not limited to, a temperature sensor disposed near the battery of the to-be-charged terminal, a module for collecting the state of the battery in the to-be-charged terminal, a temperature sensor for collecting the temperature change of the charging conversion circuit, and a module for collecting the input power and the output power of the charging conversion circuit (for example, an input current collection module and an input voltage collection module of the charging conversion module; an output current collection module and an output voltage collection module; and a processor for calculating the power according to the current and the voltage may also be included).

Also for example, as shown in Fig. 1b, the collection module 124 may include at least one of the following: a first current collection module 1241, disposed at an input end of the charging conversion circuit, and configured to collect the input current of the charging conversion circuit; a second current collection module 1243, disposed at an output end of the charging conversion circuit and configured to collect the output current of the charging conversion circuit; a first voltage collection module 1245, disposed at the input end of the charging conversion circuit and configured to collect the input voltage of the charging conversion circuit; and a second voltage collection module 1247, disposed at the output end of the charging conversion circuit and configured to collect the output voltage of the charging conversion circuit.

Also for example, as shown in Fig. 1b, the collection module 124 may further include the following modules: a first temperature collection module 1249, connected to the charging management module 122 and configured to collect first temperature information of the charging conversion circuit; and a second temperature collection module 1251, connected to the charging management module 122 and configured to collect second temperature information of a battery in the to-be-charged terminal.

The charging management module 122 is configured to generate a control instruction for implementing the following functions according to the working parameter: adjusting a working state of the charging conversion circuit 120 in the to-be-charged terminal 12, wherein different working states correspond to different charging efficiencies.

In an exemplary embodiment, the charging management module 122 is configured to identify and interact with the charging apparatus 10, perform temperature detection on the charging conversion chip and the battery, and detect the input voltage and current, and the output voltage and current of the charging conversion chip as well as the control signal of the charging conversion chip; and the switched capacitor array of the charging conversion chip converts the input power to a suitable output power to charge the battery according to the proportion.

The power management module 122 of the charging apparatus is configured to perform identification interaction with the to-be-charged terminal before charging, which not only indicates that the charging apparatus can have the specific power output capability according to the demand of the terminal, but also can know whether the terminal has the demand of the specific power output. When the communication and identification between the power management module 100 in the charging apparatus 10 and the to-be-charged terminal fails, the power management module 100 controls the power conversion output module 102 to perform power output according to a standard specification of the charging apparatus. The power management module 100 may be a functional circuit implemented by a microprocessor chip or a chip supporting a certain protocol (for example, a TYPE C PD protocol); and power conversion output module 102 may be realized by a programmable power chip or a circuit that supports adjustable voltage and current.

The charging management module 122 communicates and interacts with the charging apparatus 10 to learn the power output capability of the charging apparatus, detects the input voltage and the input current, the output voltage and the output current, and the temperature change in work for the charging conversion chip (equivalent to the charging conversion circuit 120) and detects the temperature change when the battery is charged. According to the power output state of the charging apparatus, the working state of the charging conversion chip, and the state of the battery during charging, different working processes of the charging conversion chip are selected, such that the charging conversion chip works in the state of the best efficiency, and the fast charging process of the best efficiency is realized. The charging conversion chip may be realized by the switched capacitor array chip or a switched capacitor array composed of a capacitor and a Metal Oxide Semiconductor (MOS) tube; the temperature detection may be achieved by a thermistor or other temperature-measuring components; the charging management module may be composed of the microprocessor, a voltage detection analog-to-digital conversion chip, a coulometer for current detection and a functional circuit required to control the charging conversion chip. Corresponding functional devices may be selected according to the state detection, a charging algorithm and charging conversion chip control.

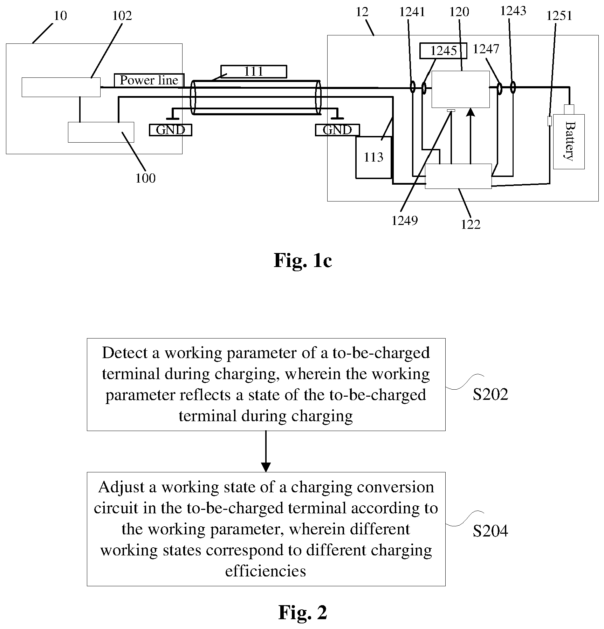

Fig. 1c is a structural schematic diagram of another exemplary charging system according to an embodiment of the present disclosure. As shown in Fig. 1c, the charging apparatus 10 and the terminal 12 are connected through a charging cable 111 and a data communication bus 113, and a charger (i.e., the charging apparatus) 10 includes: the power conversion output module 102 and the power management module 100.

Based on the embodiments shown in Fig. 1a and Fig. 1b, an embodiment of the present disclosure further provides a charging method, which may be implemented in a hardware scenario shown in Fig. 1a and Fig. 1b but is not limited thereto. As shown in Fig. 2, the method includes the following operations.

At S202, a working parameter of a to-be-charged terminal is detected during charging, wherein the working parameter reflects a state of the to-be-charged terminal during charging.

The operation that the working parameter of the to-be-charged terminal is detected during charging includes at least one of: a state of a battery in the to-be-charged terminal, a temperature change of the charging conversion circuit, and an input current or an input voltage and an output current or an output voltage of the charging conversion circuit are detected.

In an exemplary embodiment, before the working parameter of the to-be-charged terminal during charging is detected, a corresponding adjustment manner may also be determined according to a type of charging apparatus, for example, the type of the charging apparatus connected to the to-be-charged terminal is determined. The type of the charging apparatus includes: a first type for supporting the adjustment on the output electrical signal of the charging apparatus, and a second type for not supporting the adjustment on the output electrical signal of the charging apparatus. The output electrical signal includes: the output voltage and/or the output current. When the type of the charging apparatus is the first type, and the charging efficiency is not the specified charging efficiency, a first instruction for adjusting the magnitude of the output electrical signal of the charging apparatus is sent to the charging apparatus.

As another exemplary embodiment of the present disclosure, in order to ensure the smooth progress of the charging process and the accuracy of detection data, the line loss between the charging apparatus and the to-be-charged terminal may be compensated before the working parameter of the to-be-charged terminal during charging is obtained, for example, the line loss may be compensated through the following manners: sending a second instruction to the charging apparatus, wherein the second instruction is used for controlling the charging apparatus to output the current according to a first current value; determining a voltage difference according to the first current value, and the line impedance between the charging apparatus and the input end of the charging conversion circuit in the to-be-charged terminal, wherein the voltage difference is a difference value between the output voltage of the charging apparatus and an input voltage of the charging conversion circuit; and sending the voltage difference to the charging apparatus to enable the charging apparatus to compensate the line loss between the charging apparatus and the input end of the charging conversion circuit in the to-be-charged terminal according to the voltage difference.

Before the first instruction for adjusting the magnitude of the output electrical signal of the charging apparatus is sent to the charging apparatus, the conversion proportion of the charging conversion circuit may be adjusted to achieve the adjustment on the charging efficiency during the charging. For example: the conversion proportion of the charging conversion circuit is selected according to the charging current information and a state of a battery in the to-be-charged terminal, and the conversion proportion is the ratio of the input voltage and the output voltage of the charging conversion circuit. After the conversion proportion of the charging conversion circuit is selected according to the battery state and the charging current information in the to-be-charged terminal, the current may be increased to improve the charging efficiency, for example, the above may be achieved by the following manners but is not limited thereto: sending a third instruction to the charging apparatus, wherein the third instruction is used for controlling the charging apparatus to output the current according to a second current value, and the second current value being greater than the first current value.

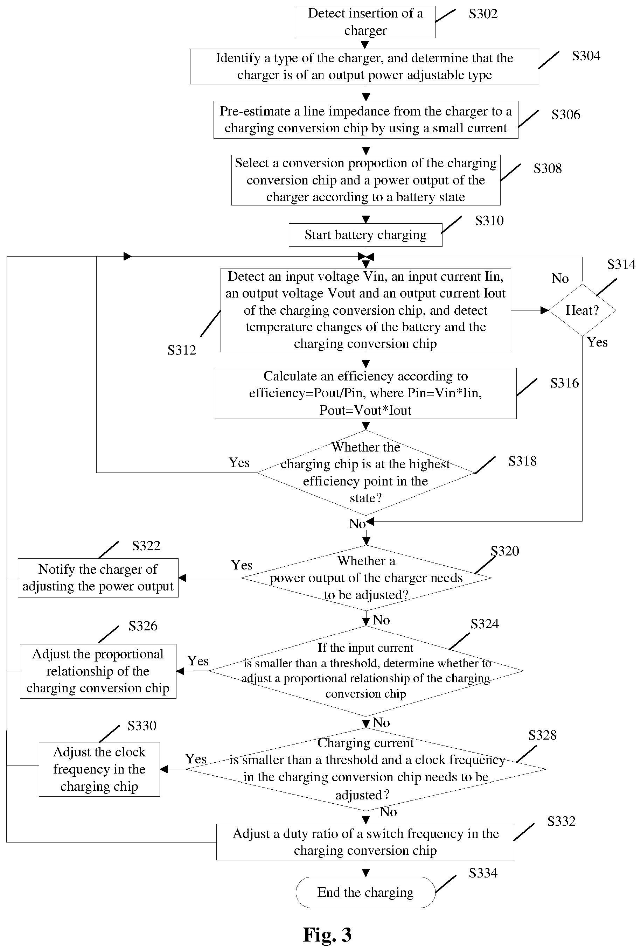

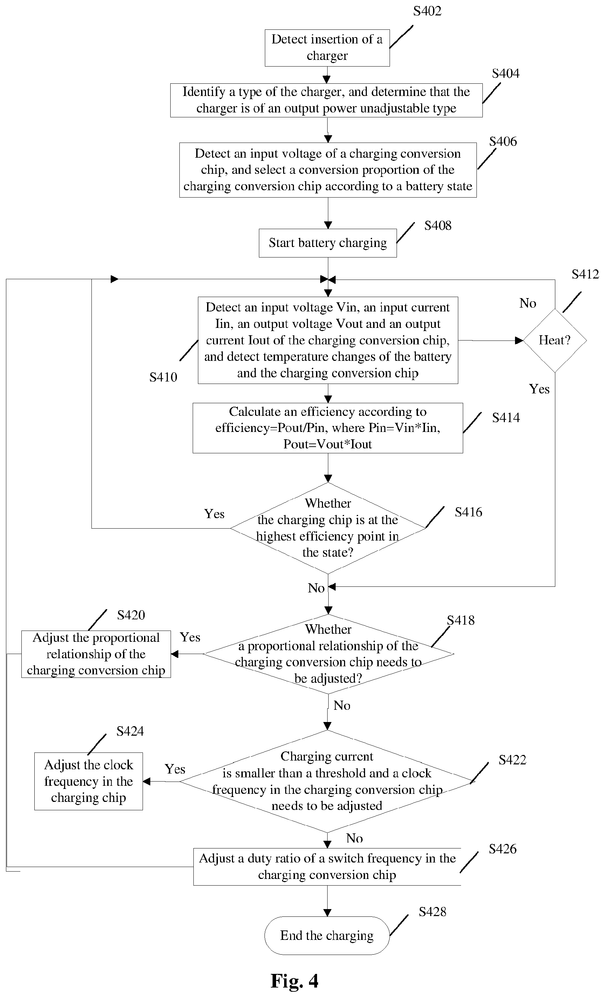

In an exemplary embodiment of the present disclosure, with the above charging apparatus including the charger and the charging conversion circuit including the charging conversion chip as the example, the charging workflow of the first type of charging apparatus can be seen in Fig. 3, and the charging workflow of the second type of charging apparatus can be seen in Fig. 4. As shown in Fig. 3 and Fig. 4, when the charger (equivalent to the charging apparatus) is inserted into the terminal (equivalent to the to-be-charged terminal) for charging the battery, a charging management unit of the terminal communicates and interacts with the charger to determine information of the charger, and whether to support adjustable power output and adjustable range. **If** the charging management unit cannot communicate with the charger (for example, when the charging cable of the non-TYPE C USB interface is not provided with the USB data signal line, the terminal and the charger cannot communicate), the voltage on the input end of the charging conversion chip (equivalent to the charging conversion circuit) is detected, the voltage is the charging voltage output by the charger to the terminal, and the output power of the charger is not adjustable by default. According to the input voltage and the battery voltage, i.e., the input voltage and the output voltage, the appropriate conversion proportion of the switched capacitor array charging conversion chip is selected, such as 1/2, 1/3, or 2/3. The conversion proportion may be achieved by opening and closing multiple switch combinations in the charging conversion chip but is not limited thereto. When the terminal may interact with the charger for identification, the charging management unit obtains the information of the charger (including but not limited to the charging protocol supported by the charger, for example, PD3.1, the charger manufacturer, loop impedance, etc.) and the power output adjustment capability (including but not limited to the range of output voltage, the range of output current, the adjustable step size of output voltage, and the adjustable step size of output current). First, the charger outputs a small current (such as 50 mA) to estimate a transmission impedance of a power line between the charger and the charging conversion chip, and the line losses at different output currents may be calculated according to the voltage difference generated by the output voltage of the charger and the voltage on the input end of the charging conversion chip, such that the charger compensates for the line losses, and the voltage reaching the charging conversion chip is more accurate. According to the state of the battery and the condition of the charging current, the appropriate proportional relationship of the switched capacitor array charging conversion chip is selected, and at the same time, the charger is notified of outputting accurate voltage and current.

The charging process shown in Fig. 3 and Fig. 4 is described in detail below.

The charging method shown in Fig. 3 includes the following operations.

At S302, it is determined that a charger (equivalent to the above charging apparatus) is inserted.

At S304, a type of the charger is identified, and it is determined that the charger is of an output power adjustable type (i.e., the above first type).

At S306, a line impedance from the charger to a charging conversion chip (equivalent to the charging conversion circuit) is pre-estimated by using a small current.

At S308, a conversion proportion of the charging conversion chip and a power output of the charger are selected according to a battery state.

At S310, battery charging is started.

At S312, an input voltage Vᵢₙ, an input current Iᵢₙ, an output voltage Vₒᵤₜ and an output current Iₒᵤₜ of the charging conversion chip are detected, and temperature changes of the battery and the charging conversion chip are detected.

At S314, whether the battery and the charging conversion chip heat, i.e., whether a temperature value is greater than a preset threshold, is determined; if yes, operation S312 is executed; and if no, operation S320 is executed.

At S316, a charging efficiency E_{charging efficiency} is calculated according to Pᵢₙ = Vᵢₙ* Iᵢₙ, Pₒᵤₜ =Vₒᵤₜ* Iₒᵤₜ and E_{charging efficiency}= Pₒᵤₜ / Pᵢₙ.

At S318, whether the charging conversion chip is at the highest efficiency point in the state (i.e., whether the chip is in the highest charging efficiency state) is determined, if yes, operation S312 is executed, or otherwise, operation S320 is executed.

At S320, whether a power output of the charger needs to be adjusted is determined, if yes, operation S322 is executed, and if no, operation S324 is executed.

At S322, the charger is notified of adjusting the power output, and operation S312 is executed.

At S324, when the input current is smaller than a threshold, whether a proportional relationship (i.e., the conversion proportion) of the charging conversion chip is adjusted is determined, if yes, operation S326 is executed, or otherwise, operation S328 is executed.

At S326, the proportional relationship of the charging conversion chip is adjusted, and operation S312 is executed.

At S328, whether a charging current is smaller than a threshold and whether a clock frequency in the charging conversion chip needs to be adjusted are determined; and if yes, operation S330 is executed, or otherwise, operation S332 is executed.

At S330, the clock frequency in the charging chip is adjusted.

At S332, a duty ratio of a switch frequency in the charging conversion chip is adjusted.

At S334, the charging is ended.

The charging method shown in Fig. 4 includes the following operations.

At S402, insertion of a charger is detected.

At S404, a type of the charger is identified, and it is determined that the charger is of an output power unadjustable type (i.e., the above second type).

At S406, an input voltage of the charging conversion chip is detected, and a conversion proportion of the charging conversion chip is selected according to a battery state.

At S408, battery charging is started.

At S410, an input voltage Vᵢₙ, an input current Iᵢₙ, an output voltage Vₒᵤₜ and an output current Iₒᵤₜ of the charging conversion chip are detected, and temperature changes of the battery and the charging conversion chip are detected.

At S412, whether the battery and the charging conversion chip heat, i.e., whether a temperature value is greater than a preset threshold, is determined; if yes, operation S418 is executed; and if no, operation S412 is executed.

At S414, a charging efficiency is calculated according to efficiency= Pₒᵤₜ / Pᵢₙ, where Pᵢₙ =Vᵢₙ* Iᵢₙ, Pₒᵤₜ =Vₒᵤₜ* Iₒᵤₜ.

At S416, whether the charging conversion chip is at the highest efficiency point in the state is determined, if yes, operation S410 is executed, or otherwise, operation S418 is executed.

At S418, whether a conversion proportion of the charging conversion chip is adjusted is determined, if yes, operation S420 is executed, or otherwise, operation S422 is executed.

At S420, the conversion proportion of the charging conversion chip is adjusted.

At S422, whether a charging current is smaller than a threshold and whether a clock frequency in the charging conversion chip needs to be adjusted are determined; and if yes, operation S424 is executed, or otherwise, operation S426 is executed.

At S424, the clock frequency in the charging chip is adjusted.

At S426, a duty ratio of a switch frequency in the charging conversion chip is adjusted.

At S428, the charging is ended.

In an exemplary embodiment, the type of the charging apparatus connected to the to-be-charged terminal may be determined through the following manners: the to-be-charged terminal sends a request message to the charging apparatus; when a response message corresponding to the request message is received within the preset time, the type of the charging apparatus is determined to be the first type; and when the response message corresponding to the request message is not received within the preset time, the type of the charging apparatus is determined to be the second type.

The above specified charging efficiency may be the charging efficiency required by a user; for the purpose of improving the charging efficiency, the specified charging efficiency includes but not limited to: the highest charging efficiency; the highest charging efficiency is determined by one of the following manners: selecting a highest value among charging efficiency values in a historical charging record as the highest charging efficiency; and receiving a setting instruction containing the charging efficiency; and taking charging efficiency contained in the setting instruction as the highest charging efficiency.

Before the first instruction is sent to the charging apparatus, it may be determined whether the charging conversion circuit satisfies a certain condition to limit the triggering condition of the sending process, for example, the sending process may be triggered when it is determined that the charging conversion circuit meets the following conditions: Vₒᵤt*a+Vₚₒₜₑₙₜᵢₐₗ difference voltage*a>V_{out design}*a=Vᵢₙ, where Vₒᵤₜ denotes the current output voltage of the charging conversion circuit, a denotes the conversion proportion of the charging conversion circuit, and the conversion proportion is the ratio of design values of the input voltage and the output voltage of the charging conversion circuit, V _{potential difference voltage} denotes the difference between the design value of the output voltage of the charging conversion circuit and the input voltage of the battery in the to-be-charged terminal, V_{out design} denotes the design output voltage of the charging conversion circuit, and Vᵢₙ denotes the input voltage of the charging conversion circuit. It is to be noted that the ratio of the input voltage to the output voltage involved in the conversion proportion may be the ratio of the design values of the theoretical input voltage and output voltage, and the theoretical input voltage and output voltage may also be the rated input voltage and output voltage of the charging conversion circuit.

At S204, a working state of a charging conversion circuit in the to-be-charged terminal is adjusted according to the working parameter, wherein different working states correspond to different charging efficiencies. Based on the step, the working state of the charging conversion circuit may be adjusted according to the above working parameter, thereby adjusting the charging efficiency.

One or more of the above four working parameters (the state of the battery in the to-be-charged terminal, the temperature change of the charging conversion circuit, the input current or the input voltage and the output current of the charging conversion circuit) may be used to adjust the working state of the charging conversion circuit. For example, in a case where multiple working parameters are used: when it is detected that the temperature of the charging conversion circuit rises and the residual electric quantity in the battery does not reach the specified value, the charging current is reduced to prevent the temperature of the charging conversion circuit from being excessively high to affect the charging efficiency. Also for example, when it is detected that the input current is smaller than the first threshold and the remaining current of the battery does not reach the specified value, the input current is increased. The combination of the above four working parameters may be flexibly adjusted according to the actual situation, and is not limited to the above embodiment.

The working state is a working state corresponding to the charging efficiency; at this time, operation S204 may be embodied as, but is not limited to, the following implementation manner: the duty ratio of the working frequency of the charging conversion circuit and/or the conversion proportion of the charging conversion circuit, and/or the clock frequency of the charging conversion circuit are adjusted according to the working parameter.

In the case where one working parameter is used, the operation S204 may be embodied as, but is not limited to, the following form.

The adjustment process of the working state in operation S204 may be embodied as, but is not limited to, the following implementation manner: whether an output current of the charging conversion circuit is smaller than a first threshold is determined; when a determination result indicates that the output current is smaller than the first threshold, a clock frequency of a charging conversion chip in the charging conversion circuit is adjusted; and when the determination result indicates that the output current is greater than the first threshold, the duty ratio of the working frequency of the charging conversion circuit is adjusted.

Before whether an output current of the charging conversion circuit is smaller than the first threshold is determined, whether the adjustment condition of the conversion proportion is met may firstly be determined; if yes, the conversion proportion may be first adjusted, i.e., the priority of the conversion proportion is higher than that of the output current. For example, the following implementation manner may be adopted: whether an input current of the charging conversion circuit is smaller than a second threshold is determined; when the input current is smaller than the second threshold, the conversion proportion of the charging conversion circuit is adjusted; and when the input current is smaller than the second threshold, the determination on whether the output current is smaller than the first threshold is triggered.

In an exemplary embodiment, after the switched capacitor array charging conversion chip (including but not limited to the charging conversion chip based on the switched capacitor array) selects an appropriate conversion proportion relationship, the charging process is started. The charging management unit in the to-be-charged terminal detects the voltage, input and output current on the input end and output end of the switched capacitor array charging conversion chip, and the temperature of the switched capacitor array charging conversion chip and the temperature of the battery in real time. According to the formula efficiency=(output voltage*output current)/(input voltage*input current), the efficiency value is calculated and then compared with the efficiency value in the corresponding state of the switched capacitor array charging conversion chip, and whether the current switched capacitor array charging conversion chip is at the highest efficiency point is determined. If the current switched capacitor array charging conversion chip is not at the highest efficiency point, for the charger with the adjustable power output, whether the voltage on the output end rises to result in reduction the charging efficiency is first checked (i.e., whether the sum of the product of the current output voltage and the conversion proportion and the potential difference voltage is greater than the input voltage is determined) when the battery is charged. If the charging efficiency is reduced due to the rise of the output voltage, the output voltage of the charger is adjusted correspondingly, such that the charging efficiency reaches the highest efficiency point. If the output power of the charger is unadjustable, whether the proportional relationship of the capacitor array charging conversion chip needs to be adjusted is determined, for example, the proportion relationship is converted from 1/3 to 1/2, the output voltage is raised, the current is changed according to the same proportion, and the conversion efficiency is improved. Alternatively, in a case where the charging current of the battery during charging changes such that the output power changes, whether the working frequency of the switch needs to be changed to reduce the switch loss caused by the frequency may be determined or whether to enable the switch capacitor to work in an oversaturated state to improve the working efficiency of the switched capacitor array charging conversion chip may be determined, for example, when the output current is lower than a value, the working frequency of the switch may be lowered; or whether the duty ratio of the working frequency signal of the switch of the charging conversion chip in the switched capacitor array needs to be adjusted is determined such that the discharge and charge of the capacitor array are close to a power balance, i.e., the input power is close to the output power, i.e., the highest efficiency point, for example, the input voltage is greater than the output voltage*proportional relationship, the duty ratio of the working frequency signal of the switch during charging is reduced.

The temperature changes of the battery and the switched capacitor array charging conversion chip are also detected while the working efficiency of the switched capacitor array charging conversion chip is detected, and the working state of the switched capacitor array charging conversion chip is adjusted according to the temperature change condition (for example, when the temperature exceeds a certain value, the input power is reduced; and when the temperature is within the limit range, the input power is raised), such that the charging process is at the optimal efficiency point of continuous operation, and then quick charging is achieved.

The temperature and the efficiency are related to a certain extent. The higher the efficiency, the lower the power loss; and the lower the heating amount, and the lower the temperature rise. The efficiency described above is the premise of adjusting the multiple parameters, i.e., the temperature change is within the preset allowable range. Since the switch capacitor conversion chip works within the allowable electrical parameter range, the temperature rise change meets the requirement and is not emphasized particularly. However, the occurrence of abnormal conditions is not ignored, and thus the temperature change is taken into account. In addition, the temperature detection of the battery is to charge the battery within the allowable working temperature range of the battery. The temperature rise of the battery during normal charging is also mainly caused by the charging current; and once the battery temperature rises, it is necessary to reduce the current and change the power of the charging conversion chip, which is equivalent to re-establishing a new working state.

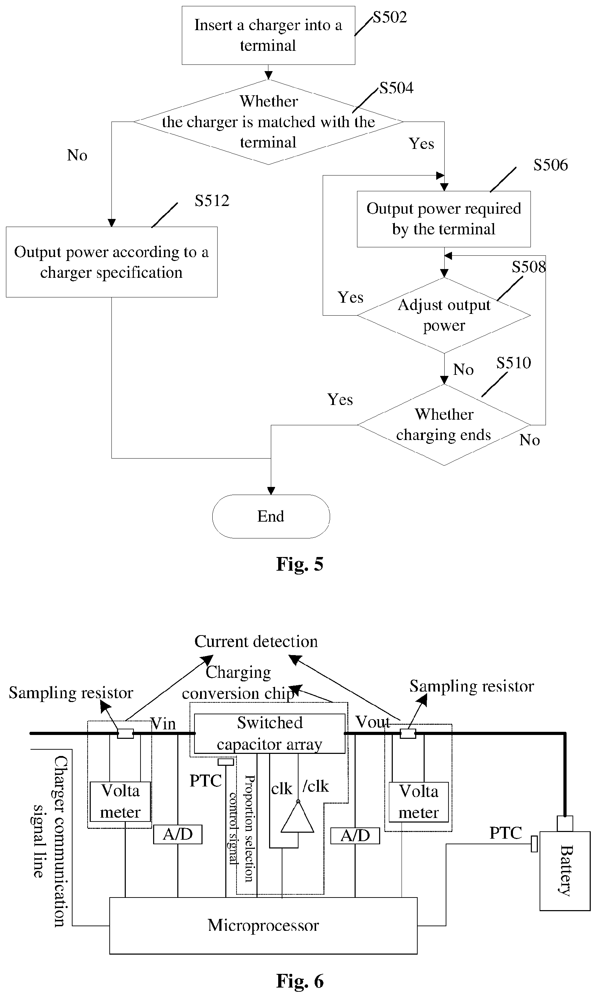

In an exemplary embodiment, when the charger is inserted into the terminal, the power management unit in the charger waits for communication with the charging management unit of the terminal, so as to confirm whether the terminal is adaptive for the charging process in need of adjusting the output power. If no, the charger outputs the power according to the default standard specification of the charger. After the charger is adapted to the charging management unit of the terminal, the charger outputs according to the power required by the terminal, and adjusts the power as required by the charging management unit of the terminal during the whole charging process, till the charging is ended. Fig. 5 is a workflow schematic diagram of an exemplary charger according to an embodiment of the present disclosure. As shown in Fig. 5, Fig. 5 includes the following operations.

At S502, insertion of a charger into a terminal is detected.

At S504, whether the charger is matched with the terminal is determined, if yes, operation S506 is executed, or otherwise, operation S512 is executed.

At S506, a power required by the terminal is output.

At S508, whether an output power is adjusted is determined, if yes, operation S506 is executed, or otherwise, operation S510 is executed.

At S510, whether charging is ended is determined.

At S512, power is output according to a charger specification.

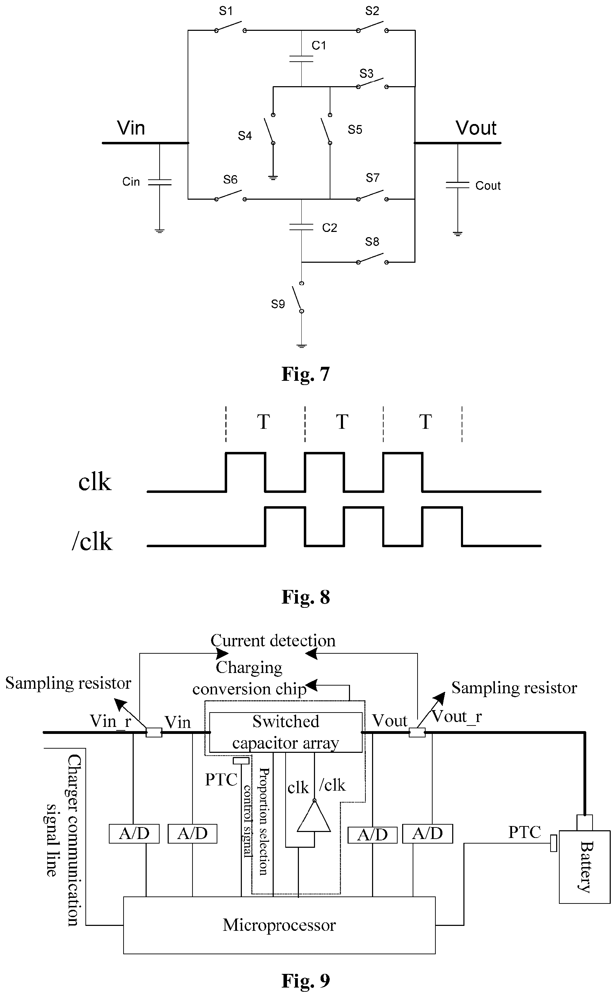

Fig. 6 and Fig. 7 are examples of an efficient charging implementation solution of the switched capacitor array. The switched capacitor array in Fig. 7 may implement a conversion proportional relationship at 1/3, 1/2 and 2/3. The specific proportion is implemented and operated as follows:
1/3 conversion proportional relationship, i.e., Vout=1/3·Vin, is operated as follows:
   Capacitor charging stage: S1, S5 and S8 are connected, other switches are disconnected, and the capacitors C1 and C2 are charged.
   Capacitor discharging stage: S2, S4, S7 and S9 are connected, other switches are disconnected, and the capacitors C1 and C2 discharge.
1/2 conversion proportional relationship, i.e., Vout=1/2·Vin, is operated as follows:
   Capacitor charging stage: S1, S3, S6 and S8 are connected, other switches are disconnected, and the capacitors C1 and C2 are charged.
   Capacitor discharging stage: S2, S4, S7 and S9 are connected, other switches are disconnected, and the capacitors C1 and C2 discharge.
2/3 conversion proportional relationship, i.e., Vout=2/3·Vin, is operated as follows:
   Capacitor charging stage: S1, S3, S6 and S8 are connected, other switches are disconnected, and the capacitors C1 and C2 are charged.
   Capacitor discharging stage: S2, S5 and S9 are connected, other switches are disconnected, and the capacitors C1 and C2 discharge.

As shown in Fig. 7, a first end of S1, a first end of S6 and Cin are connected to Vin; a second end of S1 and a first end of S2 are connected to a first end of C1; a second end of S4, a first end of S3 and a second end of S5 are connected to a second end of C1; a second end of S6, a first end of S5 and a first end of S7 are connected to a first end of C2; a second end of S9 and a first end of S8 are connected to the second end of C2; and a second end of S2, a second end of S3, a second end of S7 and a second end of S8 are connected to one end of Cout.

The switch operation during the charging stage is controlled by a clk signal in Fig. 6, and the switch operation during the discharging state is controlled by a /clk signal in Fig. 6. The clk signal and the /clk signal are in an inverse relationship, as shown in Fig. 8. Within one clock period T, the high level of the clk signal corresponds to the low level of the /clk signal, and the /clk signal may be obtained by the clk signal through a phase inverter. Therefore, the charging and discharging stages of the capacitor are controlled and distinguished strictly, and the conflict failure due to the fact that the Vin is connected to the Vout together is avoided. Before the charging is started, the charging conversion chip selects a corresponding capacitor switch combination according to a proportional signal obtained through a proportional selection control signal line, controls the switch in the charging stage by the clk signal and controls the switch in the discharging stage by the /clk signal, and disconnects all switches not participated in charging and discharging. During charging, the charging management unit selects an appropriate proportional relationship according to a change of the battery voltage, and the charging conversion chip switches the corresponding operation switch in real time. Upon the completion of charging, the charging conversion switch faults to disconnect all switches.

The voltameter and the sampling resistor form the current detection function. The analog-to-digital converter A/D is configured to measure the voltage, and convert an analog value into a digital value to transmit to the microprocessor. The thermistor PTC is configured to detect the temperature change of each of the charging conversion chip and the battery. The voltameter, the analog-to-digital converter A/D and the microprocessor are formed into a hardware portion of the charging management unit.

When the microprocessor detects that the Vin has a voltage value, it is indicated that the charger is inserted into a mobile phone, and is preparatory to charge the mobile phone. The microprocessor interacts with the charger via a communication signal line. The signal line may be a data signal line D+/D- having a USB interface, or a CC line having a TYPE C interface, and may also be a self-defined communication signal line. According to the interaction with the charger, the standard specification supported by the charger, or the power output capability is determined.

The microprocessor detects the output end of the charging conversion chip, i.e., the Vout place in Fig. 6 and Fig. 7 in the embodiment. The output end is connected to the battery, and both the output end and the battery are located on a mainboard of the terminal. As the line impedance between the output end and the battery is very small, the voltages of the Vout and the battery are nearly equal. Therefore, the current voltage of the battery may be determined via the Vout; and according to the charging curve, the allowable charging current range may be confirmed. If the charger has the adjustable power output, the appropriate conversion proportional relationship of the charging conversion chip is selected according to the Vout and the power output capability of the charger. For example, if the 1/3 proportional relationship is selected, Vin'=3*Vout, and the output current of the charger is 1/3 of the charging current. Other conversion proportional relationships are calculated similarly, Vin'=Vout/K, the K being a conversion proportional coefficient. The output current of the charger is K times of the charging current of the battery.

Before the charging is started, the charging management unit requires the charging conversion chip to close S4, S5 and S6. During actual use, the S4 has a certain impedance and allows a small current to pass to the ground. Meanwhile, the charging management unit requires the charger to output a small current value such as 50 mA, and output a default voltage such as 5 V. The line impedance may be calculated according to the detected Vin, the input end current lin, and line impedance=(5V-Vin)/lin. Output voltage of the charger=Vin'+line impedance*output current of the charger+charging potential difference voltage value. Vin'+charging potential difference voltage is the input voltage Vin of the charging conversion chip. The charging potential difference voltage value may be measured according to experiments. In the embodiment, the charging potential difference voltage value is 50 mA, Vin=Vin'+50mV>3*Vout, and thus the switch capacitor may charge the battery during discharging stage.

If the charger has the unadjustable output power, or the charger cannot interact, a close proportional conversion relationship is selected according to a ratio of the Vin to the Vout. For example, in a case where the Vin is 12 V and the Vout is 3.8 V, the selected proportional relationship may be 1/3.

After the charging is started, the charging management unit may detect the input voltage and current, and output voltage and current in real time through the A/D conversion chip and the voltameter. According to the formula efficiency=(output voltage*output current)/(input voltage*input current), the efficiency in the current working state may be calculated; and by comparing with the efficiency table established by the charging conversion chip according to the output current and the output power, whether the current charging conversion chip works at the highest efficiency point is determined. If the current efficiency is not the highest efficiency, the adjustment is made according to the detected states of the input voltage and current, and the output voltage and current of the charging conversion chip:
a. Whether the voltage of the battery rises with the charging process such that the conversion proportional relationship between the input voltage and the output voltage is inappropriate. For example, it is assumed that Vin=7 V, Vout=3.4 V, the potential difference voltage value is 200 mV, and the conversion proportional relationship is 1/2 at the beginning. Upon charging, Vout=3.5 V. It is obvious that the Vin=7 V cannot charge the battery. For the adjustable power output of the charger, the charger is required to adjust the power output such that Vin=7.2 V. For the unadjustable power output of the charger, the charging conversion chip is required to adjust the conversion proportional relationship to implement the 2/3 proportional relationship. In addition, the charging current of the battery also changes during charging, for example, when the battery is nearly full, both the charging current and the input current of the charging conversion chip become small therewith. When the input current is smaller than a threshold, the loss during the stage when the switched capacitor array charges the capacitor is mainly manifested by the crossover loss between connection and disconnection of the switch. For the charger with the adjustable power output, it is necessary to change the conversion proportional relationship to increase the input current of the charging conversion chip.
b. Whether the charging current of the battery changes with the charging process. For example, when the battery voltage is 3.7 V, the charging current is 6 A; and when the battery voltage is 4.1 V, the charging current is 1 A. That is, when the output voltage is increased from 3.7 V to 4.1 V, the output current is reduced from 6 A to 1 A. The clk signal of the switched capacitor array keeps unchanged in frequency, and is, for example, still 1 MHz. Accordingly, the loss of the switched capacitor array changes from the focus on the connection impedance loss of the switch to the focus on the crossover loss between connection and disconnection of the switch. Therefore, when the output current is lower than a threshold, the clock signal frequency of the switched capacitor array is lowered.
c. Whether the output voltage of the charger after the compensation of the line impedance loss is inaccurate due to the precision of a voltage-current detection device or the precision of the output power of the charger, such that the voltage on the input end of the charging conversion chip is not the optimal voltage value and the charging conversion chip does not work in the highest efficiency state. At this time, the change should be made to the duty ratio of the operation frequency signal. Or for the charger with the unadjustable output power, after the conversion proportional relationship is changed, the ratio of the input voltage to the output voltage in the charging conversion chip is deviated from the conversion proportional relationship, and at this time, the proportional relationship cannot be adjusted. In case of Vin<(K*Vout+K*potential difference voltage value), the charging time of the switch capacitor is decreased, i.e., the duty ratio of the clk signal is adjusted as shown in the figure, for example, the duty ratio is adjusted from 50% to 40%. On the contrary, the duty ratio of the /clk signal is increased, i.e., the discharging time of the switch capacitor is increased, such that the input power and the output power of the charging conversion chip reaches the optimal value, i.e., the working efficiency of the charging conversion chip is improved. The larger the duty ratio deviated from the conversion proportional relationship between the Vin and the Vout, the greater the reduced duty ratio of the operation frequency signal of the capacitor charging switch.

While detecting the input voltage and current, and the output voltage and current to adjust the working efficiency of the charging conversion chip, the charging management unit detects the temperatures of the charging conversion chip and the battery, so as to determine heating conditions of the charging conversion chip and the battery to prevent the charging conversion chip and the battery from stopping charging due to the continuous heating. When the temperature exceeds a certain value, the charging current is lowered. For the charger with the adjustable power output, the output current of the charger is lowered. For the charger with the unadjustable power output, the duty ratio of the operation frequency signal of the switch during the capacitor charging stage is reduced. During heating, the charging process is continued, which is also a quick charging method. For example, the battery is charged for 10 min uninterruptedly at a 2.5 A current, and the charging capacity is 25 A·min; and the battery is charged for 7 min uninterruptedly at a 3 A current, and stops to work for 3 min in case of overheating, and the charging capacity is 21 A·min. It is obvious that the continuous charging is more efficient than the charging during overheating.

Upon the completion of charging, the charging management unit notifies the charging conversion chip of disconnecting all switches, and stopping to operate the clock frequency signal. For the charger with the adjustable power output, the charging management unit notifies the charger of recovering to the default state.

Fig. 9 is a structural schematic diagram of another exemplary charging circuit according to an embodiment of the present disclosure. As shown in Fig. 9, the charging management unit detects the voltages on the input end and output end of the charging conversion chip all the time during the whole charging process. As a consequence, the input current and the output current may be calculated only by detecting the voltages on the front end of the input end sampling resistor and on the rear end of the output end sampling resistor. Both the input current and the output current may be calculated according to the formulas Iᵢₙ=(V_{in_r}-Vᵢₙ)/R_{sampling resistance} and Iₒᵤₜ =(Vₒᵤₜ-V_{out_r})/ R_{sampling resistance.}

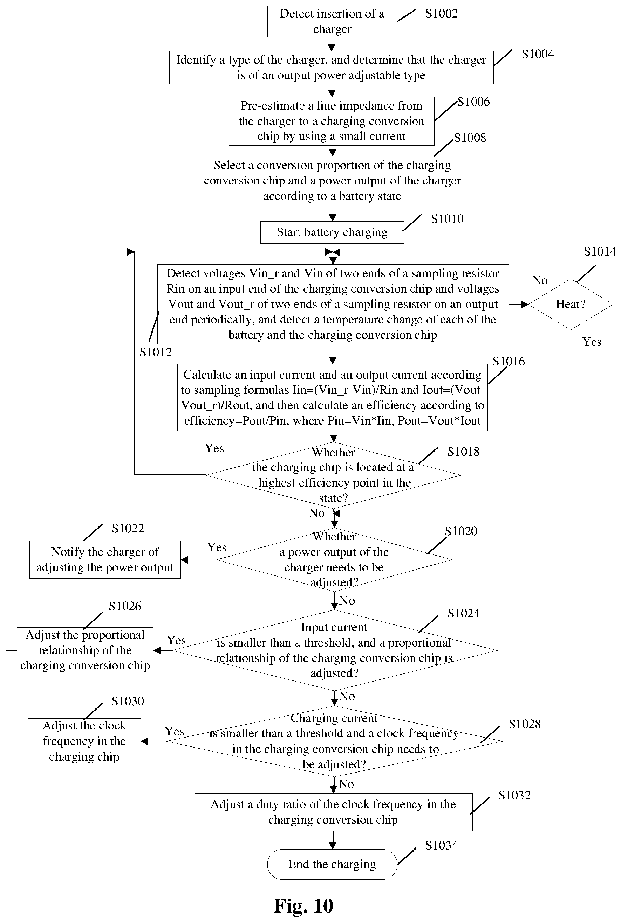

Fig. 10 is an efficient workflow diagram for a charger having an adjustable output power in an exemplary embodiment of the present disclosure. The charging method shown in Fig. 10 includes the following operations.

At S1002, insertion of a charger is detected.

At S1004, a type of the charger is identified, and it is determined that the charger is of an output power adjustable type.

At S1006, a line impedance from the charger to a charging conversion chip is pre-estimated by using a small current.

At S1008, a conversion proportion of the charging conversion chip and a power output of the charger are selected according to a battery state.

At S1010, battery charging is started.

At S1012, voltages V_{in_r} and Vᵢₙ of two ends of a sampling resistor Rᵢₙ on an input end of the charging conversion chip and voltages Vₒᵤₜ and V_{out_r} of two ends of a sampling resistor on an output end are detected periodically, and a temperature change of each of the battery and the charging conversion chip is detected.

At S1014, whether the battery and the charging conversion chip heat, i.e., whether a temperature value is greater than a preset threshold, is determined; if yes, operation S1012 is executed; and if no, operation S1020 is executed.

At S1016, an input current and an output current are calculated according to sampling formulas lin =(V_{in_r}-Vᵢₙ)/Rᵢₙ and Iₒᵤₜ=(Vₒᵤₜ-V_{out_r})/Rₒᵤₜ, and then an efficiency is calculated according to Pin=Vin* lin, Pₒᵤₜ=Vₒᵤₜ* Iₒᵤₜ and efficiency= Pₒᵤₜ / Pᵢₙ.

At S1018, whether the charging chip is located at a highest efficiency point in the state is determined, if yes, operation S1012 is executed, and if no, operation S1020 is executed.

At S1020, whether a power output of the charger needs to be adjusted is determined, if yes, operation S1022 is executed, and if no, operation S1024 is executed.

At S1022, the charger is notified of adjusting the power output, and operation S1012 is executed.

At S1024, when the input current is smaller than a threshold, whether a proportional relationship (i.e., the conversion proportion) of the charging conversion chip is adjusted is determined, if yes, operation S1026 is executed, or otherwise, operation S1028 is executed.

At S1026, the proportional relationship of the charging conversion chip is adjusted, and operation S1012 is executed.

At S1028, whether a charging current is smaller than a threshold and whether a clock frequency in the charging conversion chip needs to be adjusted are determined; and if yes, operation S1030 is executed, or otherwise, operation S1032 is executed.

At S1030, the clock frequency in the charging chip is adjusted.

At S1032, a duty ratio of the clock frequency in the charging conversion chip is adjusted.

At S1034, the charging is ended.

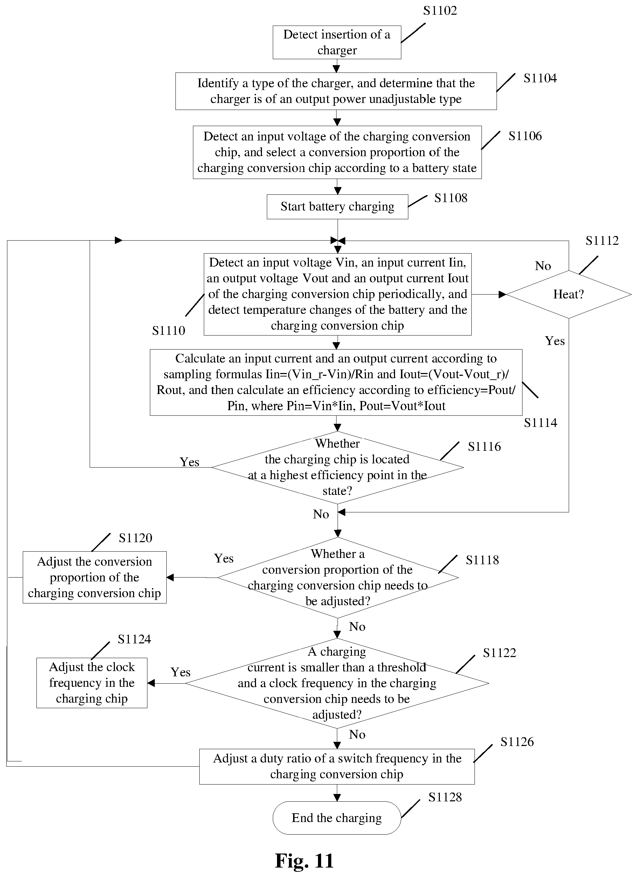

Fig. 11 is an efficient work flowchart of an exemplary charger having a fixed power output according to an embodiment of the present disclosure.

The charging method shown in Fig. 11 includes the following operations.

At S1102, insertion of a charger is detected.

At S1104, a type of the charger is identified, and it is determined that the charger is of an output power unadjustable type.

At S1106, an input voltage of the charging conversion chip is detected, and a conversion proportion of the charging conversion chip is selected according to a battery state.

At S1108, battery charging is started.

At S1110, an input voltage Vᵢₙ, an input current Iᵢₙ, an output voltage Vₒᵤₜ and an output current Iₒᵤₜ of the charging conversion chip are detected periodically, and temperature changes of the battery and the charging conversion chip are detected.

At S1112, whether the battery and the charging conversion chip heat, i.e., whether a temperature value is greater than a preset threshold, is determined; if yes, operation S1118 is executed; and if no, operation S1112 is executed.

At S1114, a charging efficiency is calculated according to efficiency= Pₒᵤₜ / Pᵢₙ, where Pᵢₙ =Vᵢₙ* Iᵢₙ, Pₒᵤₜ =Vₒᵤₜ* Iₒᵤₜ.

At S1116, whether the charging chip is located at a highest efficiency point in the state is determined, if yes, operation S1110 is executed, and if no, operation S1118 is executed.

At S1118, whether a conversion proportion of the charging conversion chip is adjusted is determined, if yes, operation S1120 is executed, or otherwise, operation S1122 is executed.

At S1120, the conversion proportion of the charging conversion chip is adjusted.

At S1122, whether a charging current is smaller than a threshold and whether a clock frequency in the charging conversion chip needs to be adjusted are determined; and if yes, operation S1124 is executed, or otherwise, operation S1126 is executed.

At S1124, the clock frequency in the charging chip is adjusted.

At S1126, a duty ratio of a switch frequency in the charging conversion chip is adjusted.

At S1128, the charging is ended.

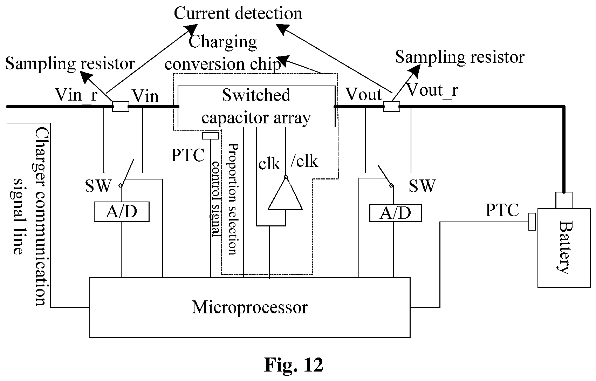

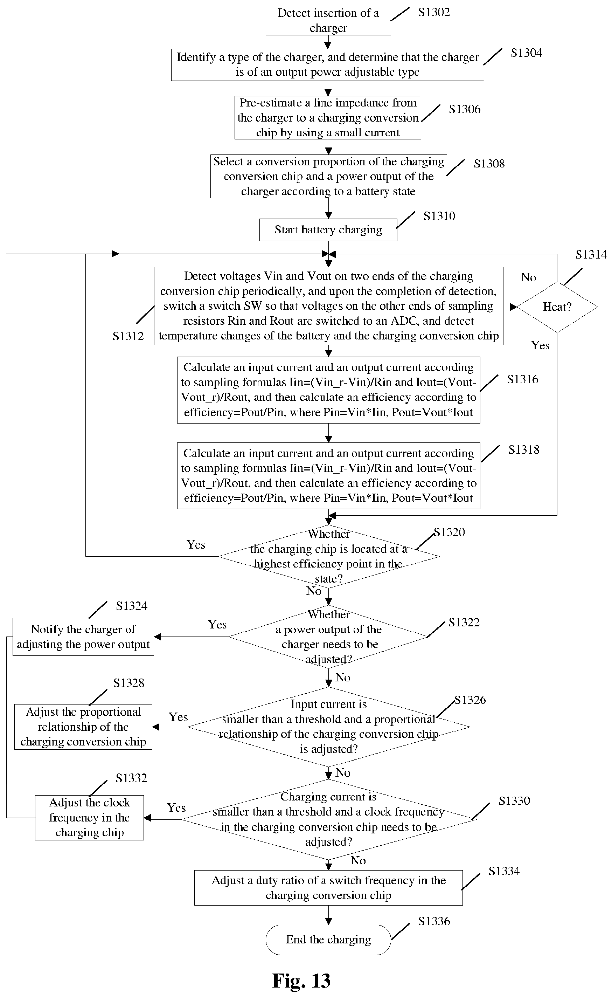

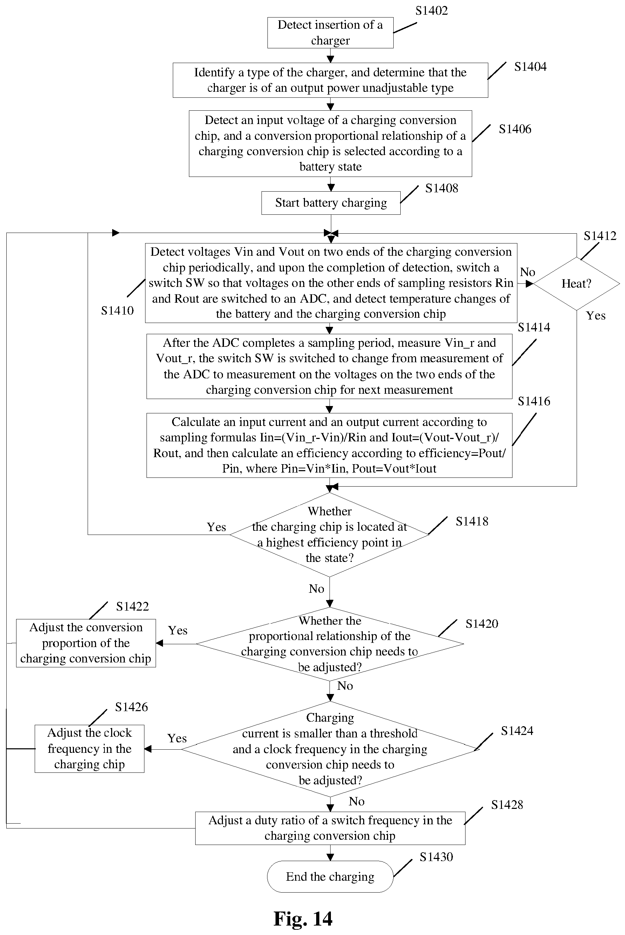

When the conversion rate of the analog-to-digital converter meets the requirement, the voltage detection in front and rear of the sampling resistor may share one A/D chip, as illustrated in the example shown in FIG. 12. When the input voltage and the output voltage of the charging chip are detected during charging, the switch SW is switched synchronously, such that the A/D chip may measure the voltage value at the other end of the sampling resistor. Both the input current and the output current may be calculated according to the formulas Iᵢₙ =(V_{in_r}-Vᵢₙ)/R_{sampling resistance} and Iₒᵤₜ =(Vₒᵤₜ-V_{out_r})/ R_{sampling resistance.} Fig. 13 and Fig. 14 respectively show another exemplary charging process.

The charging method shown in Fig. 13 includes the following operations.

At S1302, insertion of a charger is detected.

At S1304, a type of the charger is identified, and it is determined that the charger is of an output power adjustable type.

At S1306, a line impedance from the charger to a charging conversion chip is pre-estimated by using a small current.

At S1308, a conversion proportion of the charging conversion chip and a power output of the charger are selected according to a battery state.

At S1310, battery charging is started.

At S1312, voltages Vᵢₙ and Vₒᵤₜ on two ends of the charging conversion chip are detected periodically, and upon the completion of detection, a switch SW is switched so that voltages on the other ends of sampling resistors Rᵢₙ and Rₒᵤₜ are switched to an ADC, and temperature changes of the battery and the charging conversion chip are detected.

At S1314, whether the battery and the charging conversion chip heat, i.e., whether a temperature value is greater than a preset threshold, is determined; if yes, operation S1312 is executed; and if no, operation S1322 is executed.

At S1316, after the ADC completes a sampling period, V_{in_r} and V_{out_r} are measured, the switch SW is switched to change from measurement of the ADC to measurement on the voltages on the two ends of the charging conversion chip for next measurement.

At S1318, an input current and an output current are calculated according to sampling formulas Iᵢₙ =(V_{in_r}-Vᵢₙ)/ Rᵢₙ and Iₒᵤₜ =(Vₒᵤₜ-V_{out_r})/ Rₒᵤₜ, and then an efficiency is calculated according to efficiency= Pₒᵤₜ / Pᵢₙ, where Pᵢₙ =Vin* lin, Pₒᵤₜ =Vₒᵤₜ* Iₒᵤₜ.

At S1320, whether the charging chip is located at a highest efficiency point in the state is determined, if yes, operation S1312 is executed, and if no, operation S1322 is executed.

At S1322, whether a power output of the charger needs to be adjusted is determined, if yes, operation S1324 is executed, and if no, operation S1326 is executed.

At S1324, the charger is notified of adjusting the power output, and operation S1312 is executed.

At S1326, when the input current is smaller than a threshold, whether a proportional relationship (i.e., the conversion proportion) of the charging conversion chip is adjusted is determined, if yes, operation S1328 is executed, or otherwise, operation S1330 is executed.

At S1328, the proportional relationship of the charging conversion chip is adjusted, and operation S1312 is executed.

At S1330, whether a charging current is smaller than a threshold and whether a clock frequency in the charging conversion chip needs to be adjusted are determined; and if yes, operation S1332 is executed, or otherwise, operation S1334 is executed.

At S1332, the clock frequency in the charging chip is adjusted.

At S1334, a duty ratio of a switch frequency in the charging conversion chip is adjusted.

At S1336, the charging is ended.

The charging method shown in Fig. 14 includes the following operations.

At S1402, insertion of a charger is detected.

At S1404, a type of the charger is identified, and it is determined that the charger is of an output power unadjustable type.

At S1406, an input voltage of the charging conversion chip is detected periodically, and a conversion proportion of a charging conversion chip is selected according to a battery state.

At S1408, battery charging is started.

At S1410, voltages Vᵢₙ and Vₒᵤₜ on two ends of the charging conversion chip are detected periodically, and upon the completion of detection, a switch SW is switched so that voltages on the other ends of sampling resistors Rᵢₙ and Rₒᵤₜ are switched to an ADC, and temperature changes of the battery and the charging conversion chip are detected.

At S1412, whether the battery and the charging conversion chip heat, i.e., whether a temperature value is greater than a preset threshold, is determined; if yes, operation S1420 is executed; and if no, operation S1412 is executed.

At S1414, after the ADC completes a sampling period, V_{in_r} and V_{out_r} are measured, the switch SW is switched to change from measurement of the ADC to measurement on the voltages on the two ends of the charging conversion chip for next measurement.

At S1416, an input current and an output current are calculated according to sampling formulas Iᵢₙ =(V_{in_r}-Vᵢₙ)/ Rᵢₙ and Iₒᵤₜ =(Vₒᵤₜ-V_{out_r})/ Rₒᵤₜ, and then an efficiency is calculated according to efficiency= Pₒᵤₜ / Pᵢₙ ,where Pᵢₙ =Vin* lin, Pₒᵤₜ =Vₒᵤₜ* Iₒᵤₜ.

At S1418, whether the charging chip is located at a highest efficiency point in the state is determined, if yes, operation S1410 is executed, and if no, operation S1420 is executed.

At S1420, whether a conversion proportion of the charging conversion chip is adjusted is determined, if yes, operation S1422 is executed, or otherwise, operation S1424 is executed.

At S1422, the conversion proportion of the charging conversion chip is adjusted.

At S1424, whether a charging current is smaller than a threshold and whether a clock frequency in the charging conversion chip needs to be adjusted are determined; and if yes, operation S1426 is executed, or otherwise, operation S1428 is executed.

At S1426, the clock frequency in the charging chip is adjusted.

At S1428, a duty ratio of a switch frequency in the charging conversion chip is adjusted.

At S1430, the charging is ended.

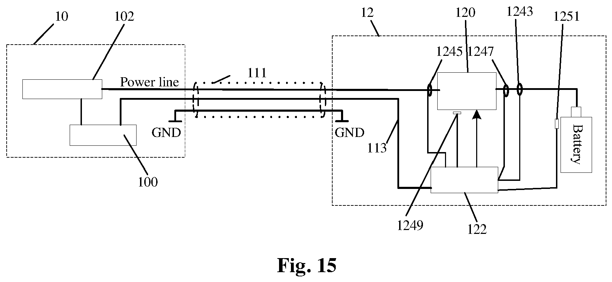

The structure of the system shown in Fig. 15 is an exemplary solution. The battery is charged within the workable current range of the switched capacitor array charging conversion chip. It is assumed that the charge-discharge relationship of the capacitor is in a linear relationship within a short time range, i.e., the input current and the output current are in a linear relationship; and the working efficiency point of the switched capacitor array charging conversion chip is relevant to the working current. Before the battery is charged, the charging management unit establishes efficiency distribution for the switched capacitor array charging conversion chip according to the working current. With a view to that the input current and the output current of the charging conversion circuit are in the linear relationship, the detection circuit for the input current or the output current may be omitted, i.e., another parameter may be determined according to one parameter.

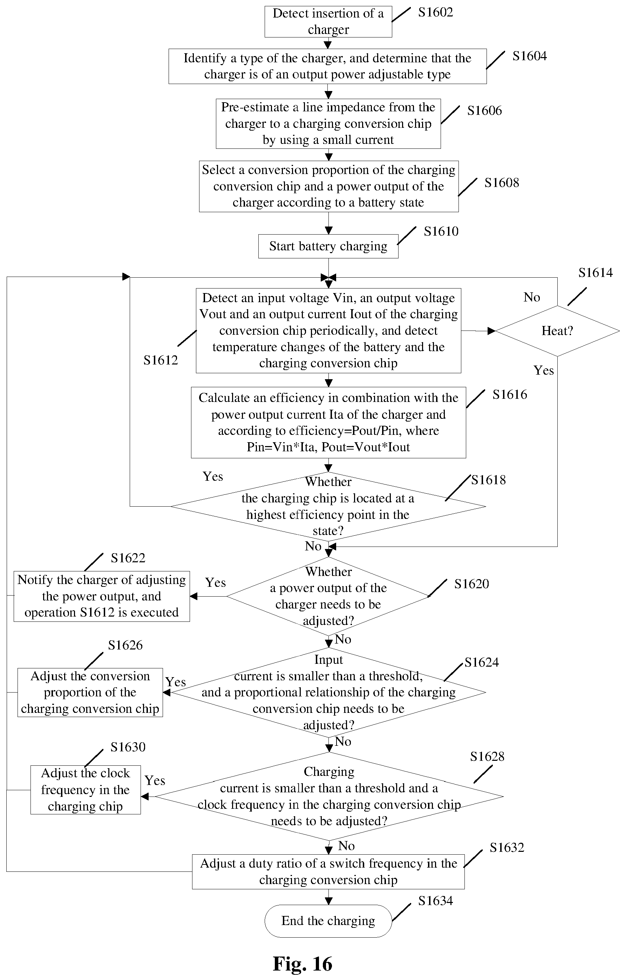

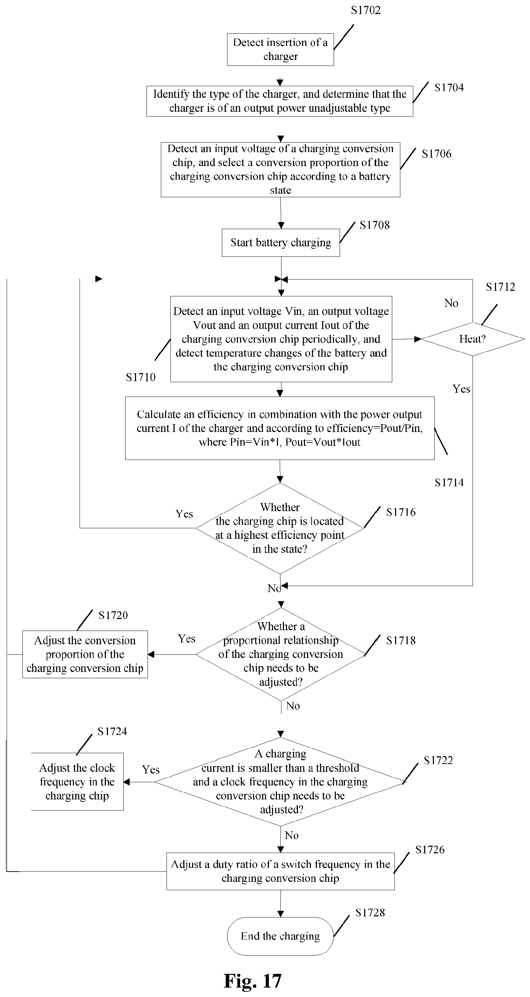

The workflow for implementing the alternative solution is as shown in Fig. 16 and Fig. 17. When the charger is inserted into the terminal to charge the battery, the charging management unit is interactive with the charger for cooperation, and makes relevant preparation before charging according to the characteristics of the charger. During charging, the charger detects the output current according to efficiency=(input voltage*output current)/(input voltage*output current*proportional coefficient)=output voltage/(proportional coefficient*input voltage), so as to determine whether the efficiency at the current output current reaches the highest efficiency. When the charger does not work at the highest efficiency point, the charger with the adjustable power output adjusts the corresponding output current according to whether the power needs to be adjusted; when the output power is not adjusted, the charger determines whether the proportional conversion relationship of the capacitor array needs to be adjusted, or adjusts the working frequency in the charging conversion chip of the capacitor array, or adjust the duty ratio of the switch efficiency in charging conversion chip of the capacitor array. During the whole charging process, the temperature changes of the charging conversion chip and the battery are detected so as to adjust the working state of the charging conversion chip till the charging is ended.

The flowchart shown in Fig. 16 includes the following operations.

At S1602, insertion of a charger is detected.

At S1604, a type of the charger is identified, and it is determined that the charger is of an output power adjustable type.

At S1606, a line impedance from the charger to a charging conversion chip is pre-estimated by using a small current.

At S1608, a conversion proportion of the charging conversion chip and a power output of the charger are selected according to a battery state.

At S1610, battery charging is started.

At S1612, an input voltage Vᵢₙ, an output voltage Vₒᵤₜ and an output current Iₒᵤₜ of the charging conversion chip are detected periodically, and temperature changes of the battery and the charging conversion chip are detected.

At S1614, whether the battery and the charging conversion chip heat, i.e., whether a temperature value is greater than a preset threshold, is determined; if yes, operation S1612 is executed; and if no, operation S1620 is executed.

At S1616, an efficiency is calculated in combination with the power output current Iₜₐ of the charger and according to efficiency= Pₒᵤₜ / Pᵢₙ, where Pᵢₙ =Vin* Iₜₐ, Pₒᵤₜ =Vₒᵤₜ* Iₒᵤₜ.

At S1618, whether the charging chip is located at a highest efficiency point in the state is determined, if yes, operation S1612 is executed, and if no, operation S1620 is executed.

At S1620, whether a power output of the charger needs to be adjusted is determined, if yes, operation S1622 is executed, and if no, operation S1624 is executed.

At S1622, the charger is notified of adjusting the power output, and operation S1612 is executed.

At S1624, when the input current is smaller than a threshold, whether a proportional relationship (i.e., the conversion proportion) of the charging conversion chip is adjusted is determined, if yes, operation S1626 is executed, or otherwise, operation S1628 is executed.

At S1626, the proportional relationship of the charging conversion chip is adjusted, and operation S1612 is executed.

At S1628, whether a charging current is smaller than a threshold and whether a clock frequency in the charging conversion chip needs to be adjusted are determined; and if yes, operation S1630 is executed, or otherwise, operation S1632 is executed.

At S1630, the clock frequency in the charging chip is adjusted.

At S1632, a duty ratio of a switch frequency in the charging conversion chip is adjusted.

At S1634, the charging is ended.

The charging process shown in Fig. 17 includes the following operations.

At S1702, insertion of a charger is detected.

At S1704, a type of the charger is identified, and it is determined that the charger is of an output power unadjustable type.

At S1706, an input voltage of a charging conversion chip is detected, and a conversion proportion of the charging conversion chip is selected according to a battery state.

At S1708, battery charging is started.

At S1710, an input voltage Vᵢₙ, an output voltage Vₒᵤₜ and an output current Iₒᵤₜ of the charging conversion chip are detected periodically, and temperature changes of the battery and the charging conversion chip are detected.

At S1712, whether the battery and the charging conversion chip heat, i.e., whether a temperature value is greater than a preset threshold, is determined; if yes, operation S1718 is executed; and if no, operation S1712 is executed.

At S1714, an efficiency is calculated in combination with the power output current I of the charger and according to efficiency= Pₒᵤₜ / Pᵢₙ, where Pᵢₙ =Vᵢₙ* I, Pₒᵤₜ =Vₒᵤₜ* Iₒᵤₜ.

At S1716, whether the charging chip is located at a highest efficiency point in the state is determined, if yes, operation S1710 is executed, and if no, operation S1718 is executed.

At S1718, whether a conversion proportion of the charging conversion chip needs to be adjusted is determined, if yes, operation S1720 is executed, or otherwise, operation S1722 is executed.

At S1720, the conversion proportion of the charging conversion chip is adjusted.

At S1722, whether a charging current is smaller than a threshold and whether a clock frequency in the charging conversion chip needs to be adjusted are determined; and if yes, operation S1724 is executed, or otherwise, operation S1726 is executed.

At S1724, the clock frequency in the charging chip is adjusted.

At S1726, a duty ratio of a switch frequency in the charging conversion chip is adjusted.

At S1728, the charging is ended.

In an exemplary embodiment, before the working state of the charging conversion circuit in the to-be-charged terminal is adjusted according to the working parameter, the method further includes that: first temperature information of the charging conversion circuit and second temperature information of a battery in the to-be-charged terminal are obtained; and the working state of the charging conversion circuit is adjusted according to the first temperature information and the second temperature information. The first temperature information and the second temperature information include at least one of the followings, but is not limited thereto: a temperature value and a temperature change value. As the charging conversion chip serves as the main device of the charging conversion circuit, the first temperature information may include but not limited to temperature information of the charging conversion chip.

Based on the solutions provided by the embodiment: 1) the range of the charger required by the switched capacitor array charging conversion chip is expanded, i.e., the application scenario of the charging conversion chip based on the switched capacitor array is expanded. 2) The highest efficiency of the charging process is adjusted adaptively, such that the adjustment in any stage supports the work at the highest efficiency point in the corresponding working state; and by detecting the powers on the input end and the output end of the charging conversion chip, the effectiveness of the data is strong, and the detection and calculation on the working efficiency point are accurate. 3) The optimal efficiency of the charging process is adjusted adaptively to implement the optimal charging process in the temperature range during charging.

### Embodiment 2

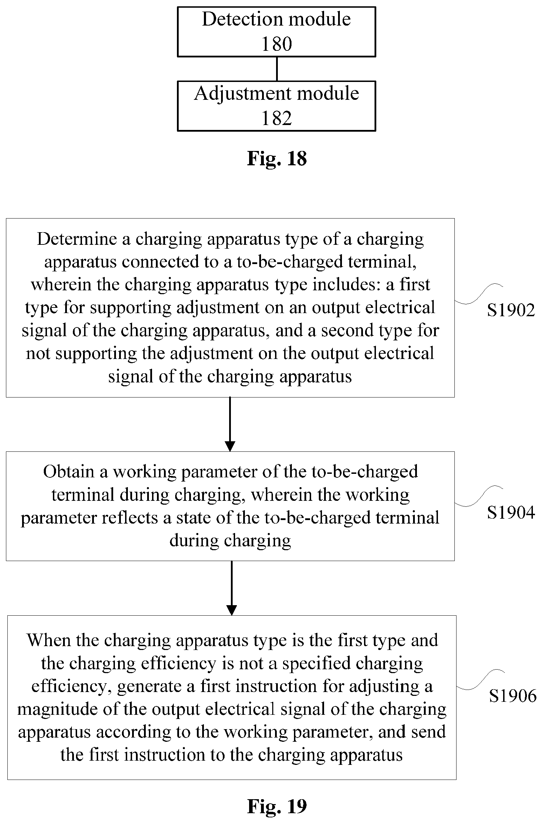

An embodiment of the present disclosure provides a charging apparatus, which is used to implement the method in Embodiment 1. As shown in Fig. 18, the apparatus includes: a detection module 180, and an adjustment module 182.

The detection module 180 is configured to detect a working parameter of a to-be-charged terminal during charging, wherein the working parameter reflects a state of the to-be-charged terminal during charging.

The adjustment module 182 is coupled to the detection module 180, and configured to adjust a working state of a charging conversion circuit in the to-be-charged terminal according to the working parameter, wherein different working states correspond to different charging efficiencies.

It is to be noted that the above modules may be implemented via software or hardware. The latter may be embodied as, but is not limited to, the following implementation manner: the above modules are located in the same processor; or, the above modules are respectively located in different processors.

It is to be noted that the exemplary implementation manners of the embodiment may be referred to relevant description in Embodiment 1 and are not elaborated herein.

### Embodiment 3

Fig. 19 is a flowchart schematic diagram of another charging method according to an embodiment of the present disclosure. As shown in FIG. 19, the method may include the following operations.

At S1902, a charging apparatus type of a charging apparatus connected to a to-be-charged terminal is determined, wherein the charging apparatus type includes: a first type for supporting adjustment on an output electrical signal of the charging apparatus, and a second type for not supporting the adjustment on the output electrical signal of the charging apparatus, and the output electrical signal includes: an output voltage and/or an output current.

At S1904, a working parameter of the to-be-charged terminal during charging is obtained, wherein the working parameter reflects a state of the to-be-charged terminal during charging. In an exemplary embodiment, the working parameter includes: a battery state in the to-be-charged terminal, and charging current information.

As an exemplary embodiment, in order to ensure the accuracy of the obtained working parameter, before the working parameter of the to-be-charged terminal during charging is obtained, a second instruction is sent to the charging apparatus, wherein the second instruction is used for controlling the charging apparatus to output the current according to a first current value; a voltage difference is determined according to the first current value, and a line impedance between the charging apparatus and an input end of a charging conversion circuit in the to-be-charged terminal, wherein the voltage difference is a difference value between the output voltage of the charging apparatus and an input voltage of the charging conversion circuit; and the voltage difference is sent to the charging apparatus to enable the charging apparatus to compensate the line loss between the charging apparatus and the input end of the charging conversion circuit in the to-be-charged terminal according to the voltage difference.

At S1906, when the charging apparatus type is the first type and the charging efficiency is not a specified charging efficiency, a first instruction for adjusting a magnitude of the output electrical signal of the charging apparatus is generated according to the working parameter, and sent to the charging apparatus.

Before the first instruction for adjusting the magnitude of the output electrical signal of the charging apparatus is generated according to the working parameter, a conversion proportion of the charging conversion circuit is selected according to the charging current information and a state of a battery in the to-be-charged terminal, wherein the conversion proportion is a ratio of the input voltage and the output voltage of the charging conversion circuit. That is, before the generation of the first instruction, the conversion proportion may be selected first to generate the first instruction.

In an exemplary embodiment, after the conversion proportion of the charging conversion circuit is selected according to the battery state and the charging current information in the to-be-charged terminal, a third instruction is sent to the charging apparatus, wherein the third instruction is used for controlling the charging apparatus to output the current according to a second current value, and the second current value being greater than the first current value. That is, the third instruction is configured to control the charging apparatus to charge according to the second current value.

It is to be noted that the exemplary implementation manners of the embodiment may be referred to relevant description in Embodiment 1 and are not elaborated herein.

### Embodiment 4

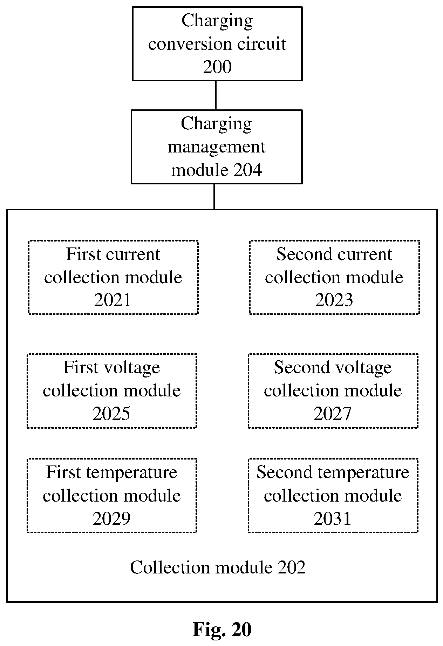

The embodiment provides a charging circuit. Fig. 20 is a structural schematic diagram of a charging circuit according to an embodiment of the present disclosure. As shown in Fig. 20, the charging circuit includes: a charging conversion circuit 200, a collection module 202, and a charging management module 204.

The charging conversion circuit 200 is connected to the charging management module 204, and configured to convert an input voltage of the charging conversion circuit into an output voltage according to a preset conversion proportion.

The collection module 202 is connected to the charging management module 204, and configured to collect a working parameter of a to-be-charged terminal during charging, and send the working parameter to the charging management module 204, wherein the working parameter reflects a state of the to-be-charged terminal during charging.

The charging management module 204 is configured to generate a control instruction for implementing the following functions according to the working parameter: adjusting a working state of the charging conversion circuit 200 in the to-be-charged terminal, wherein different working states correspond to different charging efficiencies.

The charging conversion circuit 200 may be embodied as a capacitor switch array. The capacitor switch array includes: multiple capacitor switch combinations. Each capacitor switch combination in the multiple capacitor switch combinations corresponds to one conversion proportion, and by closing and/or opening at least a part of capacitor switch circuits in each capacitor switch combination, charge-discharge states of at least a part of capacitors in each capacitor switch combination are controlled. The conversion proportion is a ratio of an input voltage to an output voltage in the charging conversion circuit.

As shown in Fig. 20, the collection module 202 includes at least one of: a first current collection module 2021, disposed at an input end of the charging conversion circuit, and configured to collect the input current of the charging conversion circuit; a second current collection module 2023, disposed at an output end of the charging conversion circuit and configured to collect the output current of the charging conversion circuit; a first voltage collection module 2025, disposed at the input end of the charging conversion circuit and configured to collect the input voltage of the charging conversion circuit; and a second voltage collection module 2027, disposed at the output end of the charging conversion circuit and configured to collect the output voltage of the charging conversion circuit.

As shown in Fig. 20, the collection module 202 may further include the following processing modules but is not limited thereto: a first temperature collection module 2029, connected to the charging management module 204 and configured to collect first temperature information of the charging conversion circuit; and a second temperature collection module 2031, connected to the charging management module 204 and configured to collect second temperature information of a battery in the to-be-charged terminal. At this time, the charging management module 204 is further configured to receive the first temperature information and the second temperature information, and adjust the working state of the charging conversion circuit according to the first temperature information and the second temperature information.

In an exemplary embodiment, the charging management module 204 is further configured to receive the first temperature information and the second temperature information, and adjust the working state of the charging conversion circuit according to the first temperature information and the second temperature information.

In another exemplary embodiment, the charging management module 204 is further configured to generate a control instruction for implementing the following functions: adjusting, according to the working parameter, a duty ratio of a working frequency of the charging conversion circuit, and/or a conversion proportion of the charging conversion circuit, and/or a clock frequency of the charging conversion circuit.

In the embodiment of the present disclosure, the charging management module 204 may include but not limited to: a processor and other hardware implementation circuits.

It is to be noted that the exemplary implementation manners of the embodiment may be referred to relevant description in Embodiment 1 and are not elaborated herein.

### Embodiment 5

The embodiment provides a terminal, which includes: the charging circuit in Embodiment 4. The specific structures and functions of the charging circuit in the embodiment may be referred to relevant description in Embodiment 4 and are not elaborated herein.

### Embodiment 6

The embodiment of the present disclosure provides a storage medium, which includes a stored program; and the program is executed to control a device where the storage medium is located to implement the charging method in Embodiment 1 or Embodiment 3.

It is to be noted that the exemplary implementation manners of the embodiment may be referred to relevant description in Embodiment 1 or 3 and are not elaborated herein.

### Embodiment 7

The embodiment of the present disclosure provides a processor; the processor is configured to execute a program; and the program is executed to implement the charging method in Embodiment 1 or Embodiment 3.

It is to be noted that the exemplary implementation manners of the embodiment may be referred to relevant description in Embodiment 1 or 3 and are not elaborated herein.

### Embodiment 8

The embodiment of the present disclosure provides an electronic apparatus, which includes a memory and a processor; a computer program is stored in the memory; and the processor is configured to implement the charging method in Embodiment 1 or Embodiment 3 through the computer program.

It is to be noted that the exemplary implementation manners of the embodiment may be referred to relevant description in Embodiment 1 or 3 and are not elaborated herein.

In the several embodiment provided by the present disclosure, it should be understood that the disclosed technical content may be implemented via other manners. The apparatus embodiment described above is only schematic, and for example, division of the units is only logic function division, and other division manners may be adopted during practical implementation. For example, multiple units or components may be combined or integrated into another system, or some characteristics may be neglected or not executed. In addition, the displayed or discussed mutual couplings or direct couplings or communication connections may be implemented through some interfaces. The indirect couplings or communication connections between the units or modules may be implemented in electronic or other forms.

The units described as separate parts may or may not be physically separated, and parts displayed as units may or may not be physical units, and namely may be located in the same place, or may also be distributed to multiple network units. Some or all of the units may be selected according to actual needs to achieve the objectives of the solutions of the embodiments.

In addition, functional units in the embodiments of the present disclosure may be integrated into one processing unit, or each of the units may exist alone physically, or two or more units are integrated into one unit. The integrated units may be implemented in a form of hardware, and may also be implemented in a form of a software functional unit.

When the integrated units are implemented in the form of the software functional unit and sold or used as an independent product, the integrated units may be stored in a computer-readable storage medium. Based on such an understanding, the technical solutions of the present disclosure substantially or parts making contributions to the conventional art or all or a part of the technical solutions may be embodied in form of software product, and the computer software product is stored in a storage medium, including a plurality of instructions configured to enable a piece of computer equipment (which may be a personal computer, a server, network equipment or the like) to implement all or a part of the operations in the method in each embodiment of the present disclosure. The abovementioned storage medium includes: various media capable of storing program codes such as a U disk, a Read-Only Memory (ROM), a Random Access Memory (RAM), a mobile hard disk, a magnetic disk or an optical disc.

## Claims

1. A charging method, comprising:
detecting (S202) a working parameter of a to-be-charged terminal during charging, wherein the working parameter reflects a state of the to-be-charged terminal during charging; and
adjusting (S204) a working state of a charging conversion circuit in the to-be-charged terminal according to the working parameter, wherein different working states correspond to different charging efficiencies;
wherein adjusting (S204) the working state of the charging conversion circuit in the to-be-charged terminal according to the working parameter comprises:
determining whether an input current of the charging conversion circuit is smaller than a second threshold; when the input current is smaller than the second threshold, adjusting the conversion proportion of the charging conversion circuit;
when the input current is larger than the second threshold, determining whether an output current of the charging conversion circuit is smaller than a first threshold; when a determination result indicates that the output current is smaller than the first threshold, adjusting a clock frequency of a charging conversion chip in the charging conversion circuit; and when the determination result indicates that the output current is greater than or equal to the first threshold, adjusting the duty ratio of the working frequency of the charging conversion circuit.

2. The method as claimed in claim 1, wherein detecting (S202) the working parameter of the to-be-charged terminal during charging comprises at least one of:
detecting a state of a battery in the to-be-charged terminal, a temperature change of the charging conversion circuit, an input current or an input voltage of the charging conversion circuit, and an output current or an output voltage of the charging conversion circuit.

3. The method as claimed in claim 1, before detecting (S202) the working parameter of the to-be-charged terminal during charging, further comprising:
determining a charging apparatus type of a charging apparatus connected to the to-be-charged terminal, wherein the charging apparatus type comprises: a first type for supporting adjustment on an output electrical signal of the charging apparatus, and a second type for not supporting the adjustment on the output electrical signal of the charging apparatus, and the output electrical signal comprises: an output voltage and/or an output current; and
when the charging apparatus type is the first type and/or the charging efficiency is not a specified charging efficiency, sending a first instruction for adjusting a magnitude of the output electrical signal of the charging apparatus to the charging apparatus.

4. The method as claimed in claim 3, wherein the specified charging efficiency comprises: a highest charging efficiency; and the highest charging efficiency is determined in one of the following manners:
selecting a highest value among charging efficiency values in a historical charging record as the highest charging efficiency; and
receiving a setting instruction containing a charging efficiency, and taking the charging efficiency contained in the setting instruction as the highest charging efficiency.

5. The method as claimed in claim 3, before sending the first instruction for adjusting the magnitude of the output electrical signal of the charging apparatus to the charging apparatus, further comprising: determining that the charging conversion circuit meets the following conditions:
Vin<Vout*a+Vpotential difference voltage*a, and V_{charger}=Vᵢₙ+V_{circuit loss}, where Vᵢₙ==V_{out design}*a, Vᵢₙ denotes an input voltage of the charging conversion circuit, V_{out design} denotes a designed output voltage of the charging conversion circuit, Vₒᵤₜ denotes an output voltage of the charging conversion circuit, V_{potential difference voltage} denotes a difference value between the designed output voltage of the charging conversion circuit and an input voltage of the battery in the to-be-charged terminal, and a denotes a proportional relationship of the charging conversion circuit.

6. The method as claimed in claim 3, wherein determining the charging apparatus type of the charging apparatus connected to the to-be-charged terminal comprises:
sending, by the to-be-charged terminal, a request message to the charging apparatus; and
when a response message corresponding to the request message is received within preset time, determining that the charging apparatus type is the first type; and when the response message corresponding to the request message is not received within the preset time, determining that the charging apparatus type is the second type.

7. The method as claimed in claim 1,
wherein the input current and the output current of the charging conversion circuit are in a linear relationship.

8. The method as claimed in any one of claims 1 to 7, before adjusting (S204) the working state of the charging conversion circuit in the to-be-charged terminal according to the working parameter, further comprising:
obtaining first temperature information of the charging conversion circuit and second temperature information of a battery in the to-be-charged terminal; and adjusting the working state of the charging conversion circuit according to the first temperature information and the second temperature information, wherein the first temperature information and the second temperature information comprise at least one of: a temperature value and a temperature change value.

9. The method as claimed in claim 3, before obtaining the working parameter of the to-be-charged terminal during charging, further comprising:
sending a second instruction to the charging apparatus, wherein the second instruction is used for controlling the charging apparatus to output a current according to a first current value;
determining a voltage difference according to the first current value and a line impedance between the charging apparatus and an input end of the charging conversion circuit in the to-be-charged terminal, wherein the voltage difference is a difference value between the output voltage of the charging apparatus and an input voltage of the charging conversion circuit; and
sending the voltage difference to the charging apparatus to enable the charging apparatus to compensate line loss between the charging apparatus and the input end of the charging conversion circuit in the to-be-charged terminal.

10. The method as claimed in claim 9, before sending the first instruction for adjusting the magnitude of the output electrical signal of the charging apparatus to the charging apparatus, further comprising:
selecting a conversion proportion of the charging conversion circuit according to charging current information and a state of a battery in the to-be-charged terminal, wherein the conversion proportion is a ratio of the input voltage to the output voltage in the charging conversion circuit.

11. The method as claimed in claim 10, after selecting the conversion proportion of the charging conversion circuit according to the battery state and the charging current information in the to-be-charged terminal, further comprising:
sending a third instruction to the charging apparatus, wherein the third instruction is used for controlling the charging apparatus to output a current according to a second current value greater than the first current value.

12. A charging circuit, comprising:
a charging conversion circuit (200), connected to a charging management module (204), and configured to convert an input voltage of the charging conversion circuit (200) into an output voltage according to a preset conversion proportion;
a collection module (202), connected to the charging management module (204), and configured to collect a working parameter of a to-be-charged terminal during charging, and sending the working parameter to the charging management module (204), wherein the working parameter reflects a state of the to-be-charged terminal during charging; and
the charging management module (204), configured to generate a control instruction for implementing the following functions according to the working parameter: adjusting a working state of the charging conversion circuit (200) in the to-be-charged terminal according to the working parameter, wherein different working states correspond to different charging efficiencies;
wherein adjusting the working state of the charging conversion circuit in the to-be-charged terminal according to the working parameter comprises:
determining whether an input current of the charging conversion circuit is smaller than a second threshold; when the input current is smaller than the second threshold, adjusting the conversion proportion of the charging conversion circuit;
when the input current is larger than the second threshold, determining whether an output current of the charging conversion circuit is smaller than a first threshold; when a determination result indicates that the output current is smaller than the first threshold, adjusting a clock frequency of a charging conversion chip in the charging conversion circuit; and when the determination result indicates that the output current is greater than or equal to the first threshold, adjusting the duty ratio of the working frequency of the charging conversion circuit.

## Patentansprüche

1. Ladeverfahren, umfassend:
Erfassen (S202) eines Betriebsparameters eines zu ladenden Endgeräts während eines Ladevorgangs, wobei der Betriebsparameter einen Zustand des zu ladenden Endgeräts während eines Ladevorgangs widerspiegelt; und
Anpassen (S204) eines Betriebszustands einer Ladeumwandlungsschaltung in dem zu ladenden Endgerät entsprechend dem Betriebsparameter, wobei unterschiedliche Betriebszustände unterschiedlichen Ladeeffizienzen entsprechen;
wobei das Anpassen (S204) des Betriebszustands der Ladeumwandlungsschaltung in dem zu ladenden Endgerät entsprechend dem Betriebsparameter umfasst:
Bestimmen, ob ein Eingangsstrom der Ladeumwandlungsschaltung kleiner als ein zweiter Schwellenwert ist; wenn der Eingangsstrom kleiner als der zweite Schwellenwert ist,
Anpassen des Umwandlungsverhältnisses der Ladeumwandlungsschaltung;
wenn der Eingangsstrom größer als der zweite Schwellenwert ist, Bestimmen, ob ein Ausgangsstrom der Ladeumwandlungsschaltung kleiner als ein erster Schwellenwert ist; wenn ein Bestimmungsergebnis anzeigt, dass der Ausgangsstrom kleiner als der erste Schwellenwert ist, Anpassen einer Taktfrequenz eines Ladeumwandlungschips in der Ladeumwandlungsschaltung; und wenn das Bestimmungsergebnis anzeigt, dass der Ausgangsstrom größer oder gleich dem ersten Schwellenwert ist, Anpassen des Tastverhältnisses der Betriebsfrequenz der Ladeumwandlungsschaltung.

2. Verfahren nach Anspruch 1, wobei das Erfassen (S202) des Betriebsparameters des zu ladenden Endgeräts während eines Ladevorgangs mindestens eines umfasst von:
Erfassen eines Zustands einer Batterie in dem zu ladenden Endgerät, einer Temperaturänderung der Ladeumwandlungsschaltung, eines Eingangsstroms oder einer Eingangsspannung der Ladeumwandlungsschaltung und eines Ausgangsstroms oder einer Ausgangsspannung der Ladeumwandlungsschaltung.

3. Verfahren nach Anspruch 1, das vor dem Erfassen (S202) des Betriebsparameters des zu ladenden Endgeräts während eines Ladevorgangs ferner umfasst:
Bestimmen eines Ladevorrichtungstyps einer mit dem zu ladenden Endgerät verbundenen Ladevorrichtung, wobei der Ladevorrichtungstyp umfasst: einen ersten Typ, der eine Anpassung eines elektrischen Ausgangssignals der Ladevorrichtung unterstützt, und einen zweiten Typ, der die Anpassung des elektrischen Ausgangssignals der Ladevorrichtung nicht unterstützt, und das elektrische Ausgangssignal umfasst: eine Ausgangsspannung und/oder einen Ausgangsstrom; und
wenn der Ladevorrichtungstyp der erste Typ ist und/oder die Ladeeffizienz keine festgelegte Ladeeffizienz ist, Senden einer ersten Anweisung zum Anpassen einer Größe des elektrischen Ausgangssignals der Ladevorrichtung an die Ladevorrichtung.

4. Verfahren nach Anspruch 3, wobei die festgelegte Ladeeffizienz umfasst: eine höchste Ladeeffizienz; und die höchste Ladeeffizienz wird auf eine der folgenden Weisen bestimmt:
Auswählen eines höchsten Werts unter den Ladeeffizienzwerten in einem historischen Ladeprotokoll als höchste Ladeeffizienz; und
Empfangen einer Einstellungsanweisung, die eine Ladeeffizienz enthält, und Verwenden der in der Einstellungsanweisung enthaltenen Ladeeffizienz als höchste Ladeeffizienz.

5. Verfahren nach Anspruch 3, das vor dem Senden der ersten Anweisung zum Anpassen der Größe des elektrischen Ausgangssignals der Ladevorrichtung an die Ladevorrichtung ferner umfasst: Bestimmen, dass die Ladeumwandlungsschaltung die folgenden Bedingungen erfüllt:
V_{Ein} < V_{Aus} * a + V_{Potentialdifferenz Spannung} * a und V_{Ladegerät} = V_{Ein} + V_{Schaltungsverlust}, wobei V_{Ein} == V_{Aus vorg} * a, V_{Ein} eine Eingangsspannung der Ladeumwandlungsschaltung bezeichnet, V_{Aus vorg} eine vorgesehene Ausgangsspannung der Ladeumwandlungsschaltung bezeichnet, V_{Aus} eine Ausgangsspannung der Ladeumwandlungsschaltung bezeichnet, V_{Potentialdifferenz Spannung} einen Differenzwert zwischen der vorgesehenen Ausgangsspannung der Ladeumwandlungsschaltung und einer Eingangsspannung der Batterie in dem zu ladenden Endgerät bezeichnet und a eine proportionale Beziehung der Ladeumwandlungsschaltung bezeichnet.

6. Verfahren nach Anspruch 3, wobei das Bestimmen des Ladevorrichtungstyps der mit dem zu ladenden Endgerät verbundenen Ladevorrichtung umfasst:
Senden einer Anforderungsnachricht durch das zu ladende Endgerät an die Ladevorrichtung; und
wenn eine der Anforderungsnachricht entsprechende Antwortnachricht innerhalb einer voreingestellten Zeit empfangen wird, Bestimmen, dass der Ladevorrichtungstyp der erste Typ ist; und wenn die der Anforderungsnachricht entsprechende Antwortnachricht nicht innerhalb der voreingestellten Zeit empfangen wird, Bestimmen, dass der Ladevorrichtungstyp der zweite Typ ist.

7. Verfahren nach Anspruch 1,
wobei der Eingangsstrom und der Ausgangsstrom der Ladeumwandlungsschaltung in einer linearen Beziehung zueinander stehen.

8. Verfahren nach einem der Ansprüche 1 bis 7, das vor dem Anpassen (S204) des Betriebszustands der Ladeumwandlungsschaltung in dem zu ladenden Endgerät entsprechend dem Betriebsparameter ferner umfasst:
Erhalten einer ersten Temperaturinformation der Ladeumwandlungsschaltung und einer zweiten Temperaturinformation einer Batterie in dem zu ladenden Endgerät; und Anpassen des Betriebszustands der Ladeumwandlungsschaltung entsprechend der ersten Temperaturinformation und der zweiten Temperaturinformation,
wobei die erste Temperaturinformation und die zweite Temperaturinformation mindestens eines umfassen von: einem Temperaturwert und einem Temperaturänderungswert.

9. Verfahren nach Anspruch 3, das vor dem Erhalten des Betriebsparameters des zu ladenden Endgeräts während eines Ladevorgangs ferner umfasst:
Senden einer zweiten Anweisung an die Ladevorrichtung, wobei die zweite Anweisung zum Steuern der Ladevorrichtung dient, um einen Strom gemäß einem ersten Stromwert auszugeben;
Bestimmen einer Spannungsdifferenz entsprechend dem ersten Stromwert und einer Leitungsimpedanz zwischen der Ladevorrichtung und einem Eingangsende der Ladeumwandlungsschaltung in dem zu ladenden Endgerät, wobei die Spannungsdifferenz ein Differenzwert zwischen der Ausgangsspannung der Ladevorrichtung und einer Eingangsspannung der Ladeumwandlungsschaltung ist; und
Senden der Spannungsdifferenz an die Ladevorrichtung, um die Ladevorrichtung in die Lage zu versetzen, den Leitungsverlust zwischen der Ladevorrichtung und dem Eingangsende der Ladeumwandlungsschaltung in dem zu ladenden Endgerät zu kompensieren.

10. Verfahren nach Anspruch 9, das vor dem Senden der ersten Anweisung zum Anpassen der Größe des elektrischen Ausgangssignals der Ladevorrichtung an die Ladevorrichtung ferner umfasst:
Auswählen eines Umwandlungsverhältnisses der Ladeumwandlungsschaltung entsprechend der Ladestrominformation und einem Zustand einer Batterie in dem zu ladenden Endgerät, wobei das Umwandlungsverhältnis ein Verhältnis der Eingangsspannung zu der Ausgangsspannung in der Ladeumwandlungsschaltung ist.

11. Verfahren nach Anspruch 10, das nach dem Auswählen eines Umwandlungsverhältnisses der Ladeumwandlungsschaltung entsprechend dem Batteriezustand und der Ladestrominformation in dem zu ladenden Endgerät ferner umfasst:
Senden einer dritten Anweisung an die Ladevorrichtung, wobei die dritte Anweisung zum Steuern der Ladevorrichtung dient, um einen Strom gemäß einem zweiten Stromwert auszugeben, der größer als der erste Stromwert ist.

12. Ladeschaltung, umfassend:
eine Ladeumwandlungsschaltung (200), die mit einem Ladeverwaltungsmodul (204) verbunden und dazu konfiguriert ist, eine Eingangsspannung der Ladeumwandlungsschaltung (200) gemäß einem voreingestellten Umwandlungsverhältnis in eine Ausgangsspannung umzuwandeln;
ein Erfassungsmodul (202), das mit dem Ladeverwaltungsmodul (204) verbunden und dazu konfiguriert ist, einen Betriebsparameter eines zu ladenden Endgeräts während eines Ladevorgangs zu erfassen und den Betriebsparameter an das Ladeverwaltungsmodul (204) zu senden, wobei der Betriebsparameter einen Zustand des zu ladenden Endgeräts während eines Ladevorgangs widerspiegelt; und
wobei das Ladeverwaltungsmodul (204) dazu konfiguriert ist, eine Steueranweisung zum Ausführen der folgenden Funktionen gemäß dem Betriebsparameter zu erzeugen: Anpassen eines Betriebszustands der Ladeumwandlungsschaltung (200) in dem zu ladenden Endgerät gemäß dem Betriebsparameter, wobei unterschiedliche Betriebszustände unterschiedlichen Ladeeffizienzen entsprechen;
wobei das Anpassen des Betriebszustands der Ladeumwandlungsschaltung in dem zu ladenden Endgerät entsprechend dem Betriebsparameter umfasst:
Bestimmen, ob ein Eingangsstrom der Ladeumwandlungsschaltung kleiner als ein zweiter Schwellenwert ist; wenn der Eingangsstrom kleiner als der zweite Schwellenwert ist, Anpassen des Umwandlungsverhältnisses der Ladeumwandlungsschaltung;
wenn der Eingangsstrom größer als der zweite Schwellenwert ist, Bestimmen, ob ein Ausgangsstrom der Ladeumwandlungsschaltung kleiner als ein erster Schwellenwert ist; wenn ein Bestimmungsergebnis anzeigt, dass der Ausgangsstrom kleiner als der erste Schwellenwert ist, Anpassen einer Taktfrequenz eines Ladeumwandlungschips in der Ladeumwandlungsschaltung; und wenn das Bestimmungsergebnis anzeigt, dass der Ausgangsstrom größer oder gleich dem ersten Schwellenwert ist, Anpassen des Tastverhältnisses der Betriebsfrequenz der Ladeumwandlungsschaltung.

## Revendications

1. Procédé de charge, comprenant:
détecter (S202) un paramètre de fonctionnement d'une borne à charger pendant la charge, dans lequel le paramètre de fonctionnement reflète un état de la borne à charger pendant la charge; et
ajuster (S204) un état de fonctionnement d'un circuit de conversion de charge dans la borne à charger en fonction du paramètre de fonctionnement, dans lequel différents états de fonctionnement correspondent à différentes efficacités de charge;
dans lequel le réglage (S204) de l'état de fonctionnement du circuit de conversion de charge dans la borne à charger en fonction du paramètre de fonctionnement comprend:
déterminer si un courant d'entrée du circuit de conversion de charge est inférieur à un deuxième seuil; lorsque le courant d'entrée est inférieur au deuxième seuil, ajuster la proportion de conversion du circuit de conversion de charge;
lorsque le courant d'entrée est supérieur au deuxième seuil, déterminer si un courant de sortie du circuit de conversion de charge est inférieur à un premier seuil; lorsqu'un résultat de détermination indique que le courant de sortie est inférieur au premier seuil, ajuster une fréquence d'horloge d'une puce de conversion de charge dans le circuit de conversion de charge;
et lorsque le résultat de détermination indique que le courant de sortie est supérieur ou égal au premier seuil, ajuster le rapport cyclique de la fréquence de fonctionnement du circuit de conversion de charge.

2. Procédé selon la revendication 1, dans lequel la détection (S202) du paramètre de fonctionnement de la borne à charger pendant la charge comprend au moins l'un des éléments suivants:
détecter un état d'une batterie dans la borne à charger, un changement de température du circuit de conversion de charge, un courant d'entrée ou une tension d'entrée du circuit de conversion de charge, et un courant de sortie ou une tension de sortie du circuit de conversion de charge.

3. Procédé selon la revendication 1, avant de détecter (S202) le paramètre de fonctionnement de la borne à charger pendant la charge, comprenant en outre:
déterminer un type d'appareil de charge d'un appareil de charge relié à la borne à charger, dans lequel le type d'appareil de charge comprend : un premier type pour supporter le réglage sur un signal électrique de sortie de l'appareil de charge, et un deuxième type pour ne pas supporter le réglage sur le signal électrique de sortie de l'appareil de charge, et le signal électrique de sortie comprend : une tension de sortie et/ou un courant de sortie; et
lorsque le type d'appareil de charge est le premier type et/ou que l'efficacité de charge n'est pas une efficacité de charge spécifiée, envoyer une première instruction pour ajuster une amplitude du signal électrique de sortie de l'appareil de charge à l'appareil de charge.

4. Procédé selon la revendication 3, dans lequel l'efficacité de charge spécifiée comprend : une efficacité de charge la plus élevée; et l'efficacité de charge la plus élevée est déterminée selon l'une des modalités suivantes:
sélectionner une valeur la plus élevée parmi les valeurs d'efficacité de charge dans un historique de charge comme l'efficacité de charge la plus élevée; et
recevoir une instruction de paramétrage contenant une efficacité de charge et considérer l'efficacité de charge contenue dans l'instruction de paramétrage comme l'efficacité de charge la plus élevée.

5. Procédé selon la revendication 3, avant d'envoyer la première instruction pour ajuster l'amplitude du signal électrique de sortie de l'appareil de charge à l'appareil de charge, comprenant en outre: la détermination que le circuit de conversion de charge satisfait aux conditions suivantes :
V_{entrée}<Vₛₒᵣₜᵢₑ*a+V_{tension de différence de potentiel}*a, et V_{chargeur}=V_{entrée}+Vₚₑᵣₜₑ de circuit, où V_{entrée}==V_{sortie nominale}*a, Ventrée désigne une tension d'entrée du circuit de conversion de charge, V_{sortie nominale} désigne une tension de sortie nominale du circuit de conversion de charge, Vₛₒᵣₜᵢₑ désigne une tension de sortie du circuit de conversion de charge, V_{tension de différence de potentiel} désigne une valeur de différence entre la tension de sortie nominale du circuit de conversion de charge et une tension d'entrée de la batterie dans la borne à charger, et a désigne une relation proportionnelle du circuit de conversion de charge.

6. Procédé selon la revendication 3, dans lequel la détermination du type d'appareil de charge de l'appareil de charge relié à la borne à charger comprend:
envoyer, par la borne à charger, un message de demande à l'appareil de charge; et
lorsqu'un message de réponse correspondant au message de demande est reçu dans un délai prédéfini, déterminer que le type d'appareil de charge est le premier type ; et lorsque le message de réponse correspondant au message de demande n'est pas reçu dans le délai prédéfini, déterminer que le type d'appareil de charge est le deuxième type.

7. Procédé selon la revendication 1,
dans lequel le courant d'entrée et le courant de sortie du circuit de conversion de charge sont dans une relation linéaire.

8. Procédé selon l'une quelconque des revendications 1 à 7, avant d'ajuster (S204) l'état de fonctionnement du circuit de conversion de charge dans la borne à charger en fonction du paramètre de fonctionnement, comprenant en outre:
obtenir des premières informations de température du circuit de conversion de charge et des deuxièmes informations de température d'une batterie dans la borne à charger; et ajuster l'état de fonctionnement du circuit de conversion de charge en fonction des premières informations de température et des deuxièmes informations de température, dans lequel les premières informations de température et les deuxièmes informations de température comprennent au moins une valeur parmi: une valeur de température et une valeur de changement de température.

9. Procédé selon la revendication 3, avant d'obtenir le paramètre de fonctionnement de la borne à charger pendant la charge, comprenant en outre:
envoyer une deuxième instruction à l'appareil de charge, dans lequel la deuxième instruction est utilisée pour commander l'appareil de charge pour sortir un courant selon une première valeur de courant;
déterminer une différence de tension selon la première valeur de courant et une impédance de ligne entre l'appareil de charge et une extrémité d'entrée du circuit de conversion de charge dans la borne à charger, dans lequel la différence de tension est une valeur de différence entre la tension de sortie de l'appareil de charge et une tension d'entrée du circuit de conversion de charge; et
envoyer la différence de tension à l'appareil de charge pour permettre à l'appareil de charge de compenser la perte de ligne entre l'appareil de charge et l'extrémité d'entrée du circuit de conversion de charge dans la borne à charger.

10. Procédé selon la revendication 9, avant d'envoyer la première instruction pour ajuster l'amplitude du signal électrique de sortie de l'appareil de charge à l'appareil de charge, comprenant en outre:
sélectionner une proportion de conversion du circuit de conversion de charge en fonction des informations de courant de charge et d'un état d'une batterie dans la borne à charger, dans lequel la proportion de conversion est un rapport de la tension d'entrée à la tension de sortie dans le circuit de conversion de charge.

11. Procédé selon la revendication 10, après avoir sélectionné la proportion de conversion du circuit de conversion de charge en fonction de l'état de la batterie et des informations de courant de charge dans la borne à charger, comprenant en outre:
envoyer une troisième instruction à l'appareil de charge, dans lequel la troisième instruction est utilisée pour commander l'appareil de charge pour sortir un courant selon une deuxième valeur de courant supérieure à la première valeur de courant.

12. Circuit de charge, comprenant:
un circuit de conversion de charge (200), relié à un module de gestion de charge (204), et configuré pour convertir une tension d'entrée du circuit de conversion de charge (200) en une tension de sortie selon une proportion de conversion prédéfinie;
un module de collecte (202), relié au module de gestion de charge (204), et configuré pour collecter un paramètre de fonctionnement d'une borne à charger pendant la charge, et envoyer le paramètre de fonctionnement au module de gestion de charge (204), dans lequel le paramètre de fonctionnement reflète un état de la borne à charger pendant la charge; et
le module de gestion de charge (204), configuré pour générer une instruction de commande pour mettre en œuvre les fonctions suivantes en fonction du paramètre de fonctionnement : ajuster un état de fonctionnement du circuit de conversion de charge (200) dans la borne à charger en fonction du paramètre de fonctionnement, dans lequel différents états de fonctionnement correspondent à différentes efficacités de charge;
dans lequel le réglage de l'état de fonctionnement du circuit de conversion de charge dans la borne à charger en fonction du paramètre de fonctionnement comprend :
déterminer si un courant d'entrée du circuit de conversion de charge est inférieur à un deuxième seuil; lorsque le courant d'entrée est inférieur au deuxième seuil, ajuster la proportion de conversion du circuit de conversion de charge;
lorsque le courant d'entrée est supérieur au deuxième seuil, déterminer si un courant de sortie du circuit de conversion de charge est inférieur à un premier seuil; lorsqu'un résultat de détermination indique que le courant de sortie est inférieur au premier seuil, ajuster une fréquence d'horloge d'une puce de conversion de charge dans le circuit de conversion de charge;
et lorsque le résultat de détermination indique que le courant de sortie est supérieur ou égal au premier seuil, ajuster le rapport cyclique de la fréquence de fonctionnement du circuit de conversion de charge.
